## Europäisches Patentamt

## European Patent Office

## Office européen des brevets

(19)

(11) Veröffentlichungsnummer: **0 055 209**
**B1**

(12) **EUROPÄISCHE PATENTSCHRIFT**

(45) Veröffentlichungstag der Patentschrift:
**06.11.85**

(51) Int. Cl.⁴: **G 02 B 21/24**

(21) Anmeldenummer: **81810341.8**

(22) Anmeldetag: **20.08.81**

(54) **Strahlenumlenkvorrichtung.**

(30) Priorität: **18.12.80 CH 9359/80**

(43) Veröffentlichungstag der Anmeldung:
**30.06.82 Patentblatt 82/26**

(45) Bekanntmachung des Hinweises auf die Patenterteilung:
**06.11.85 Patentblatt 85/45**

(84) Benannte Vertragsstaaten:
**AT DE GB**

(56) Entgegenhaltungen:
**DE - B - 1 020 196**
**DE - B - 2 416 106**
**DE - B - 2 747 875**

(73) Patentinhaber: **WILD HEERBRUGG AG.,**
**CH-9435 Heerbrugg (CH)**

(72) Erfinder: **Schaefer, Andreas, Dr., Sonnenstrasse 1,**
**CH-9436 Balgach (CH)**
Erfinder: **Schulz, Luitpold, Rietstrasse 8,**
**CH-9443 Widnau (CH)**
Erfinder: **Suhner, Heinz, Blumenstrasse 3,**
**CH-9445 Rebstein (CH)**

(74) Vertreter: **Punschke und Frei Patentanwälte,**
**Hedwigsteig 6 Postfach 95, CH-8029 Zürich (CH)**

## Beschreibung

Die Erfindung bezieht sich auf eine Strahlenumlenkvorrichtung für ein optisches Instrument, insbesondere ein Mikroskop beliebiger Art, um einen Gegenstand aus Richtungen abweichend vom im wesentlichen durch die optische Achse des Instrumentes gegebenen Normalstrahlengang zu betrachten, wobei diese Vorrichtung zwei reflektierende Flächen aufweist, von welchen eine in den Normalstrahlengang einbringbar ist.

Aus der DE-B 2 416 106 ist eine Vorrichtung zum Einstellen eines optischen Beobachtungsgeräts, vorzugsweise eines Binokularmikroskops, bekannt, dessen optischer Teil an einem feststehenden Trägerteil in Höhenrichtung verstellbar ist. Bei diesem Gerät sind zwei Spiegel am Trägerteil angeordnet, welche die Blickrichtung des Beobachtungsgeräts umlenken. Damit soll jeder Ortspunkt innerhalb eines gewissen Raumgebietes aus einer wählbaren Blickrichtung betrachtet werden können. Ausserdem sollen der beobachtete Ortspunkt sowie die Blickrichtung nach Belieben geändert werden können. Dabei schneiden sich die beiden optischen Achsen in einem Punkt, der jedoch nicht auf dem Objekt liegt. Der axiale Objektpunkt des umgelenkten Strahlenganges liegt bei dieser Vorrichtung auf der optischen Achse des Normalstrahlenganges, bzw. umgekehrt. Für den Einsatz im robusten industriellen Bereich, z.B. im Produktionsbereich, eignet sich die bekannte Vorrichtung nicht, da ein immer wiederkehrendes Nachstellen des Mikroskops und insbesondere der Schärfe notwendig ist. Dadurch würde sich das Arbeiten an dieser Vorrichtung zeitraubend, umständlich und ermüdend gestalten.

Es ist Aufgabe der vorliegenden Erfindung, die eingangs definierte Strahlenumlenkvorrichtung dahingehend zu verbessern, dass sie sich auch für robusten industriellen Einsatz, z.B.im Produktionsbereich, eignet.

Insbesondere ist es ein Ziel der Erfindung, eine Vorrichtung zu schaffen, welche in einer Ausführungsvariante an ein bestehendes optisches Instrument, insbesondere ein Mikroskop oder Stereomikroskop ansetzbar und in einer anderen Variante als Baugruppe in ein solches einbaubar ist, wobei in einfacher Weise von der Normalbetrachtung, z.B. von oben, auf seitliche Betrachtung umgeschaltet werden kann, ohne den Gegenstand verschieben zu müssen. Ausserdem soll die stereoskopische Betrachtungsweise auch mit dieser Vorrichtung erhalten bleiben. Darüberhinaus soll die durch das Mikroskop gegebene Manipulierfreiheit und die Präparatgrösse durch die Vorrichtung nicht oder nicht wesentlich eingeschränkt werden. Es sollte auch die Möglichkeit bestehen, diese Vorrichtung ohne am optischen Instrument nachfokussieren zu müssen, nur durch ihr Einschwenken in den Normalstrahlengang verwenden zu können. Ebenso sollte eine Betrachtung des Gegenstandes aus einem kontinuierlichen Bereich für das Azimut durch kontinuierliche Verstellung der Vorrichtung möglich sein.

Diese Aufgabe wird erfindungsemäss durch die in den Ansprüchen definierten Merkmale gelöst.

Einige Ausführungsbeispiele von erfindungsgemässen Vorrichtungen ergeben sich aus der Beschreibung anhand der schematischen Zeichnung. In dieser zeigt:

Fig. 1 den Strahlengang eines Stereomikroskopes mit einer Strahlenumlenkvorrichtung ohne Korrekturglieder,

Fig. 2 den Strahlengang eines Stereomikroskops mit einer Strahlenumlenkvorrichtung ohne Korrekturglieder, aber mit einem gegenüber der Variante aus Fig. 1 grösserem seitlichen Betrachtungswinkel,

Fig. 3 den Strahlengang eines monokularen Mikroskops mit einer Stralenumlenkvorrichtung nach Fig. 1,

Fig. 4 den Strahlengang eines Stereomikroskops bei einer anderen Ausführungsform einer Strahlenumlenkvorrichtung,

Fig. 5a den Strahlengang eines Stereomikroskops mit einer Strahlenumlenkvorrichtung mit Korrekturglied in der Stellung bei umgelenktem Strahlengang,

Fig. 5b die Geräte nach Fig. 5a in der Stellung mit Normalstrahlengang,

Fig. 5c einen Schnitt durch eine beispielsweise an ein Mikroskop ansetzbare Strahlenumlenkvorrichtung nach Fig. 5a,

Fig. 6a den Strahlengang eines Stereomikroskopes mit einer Strahlenumlenkvorrichtung und einer zweiten Art eines Korrekturgliedes in der Stellung bei umgelenktem Strahlengang,

Fig. 6b die Geräte nach Fig. 6a in der Stellung bei Normalstrahlengang,

Fig. 7a den Strahlengang eines Stereomikroskops mit einer Strahlenumlenkvorrichtung mit zwei Hauptobjektiven des Mikroskops, in der Stellung bei umgelenktem Strahlengang,

Fig. 7b Vorrichtung nach Fig. 7a bei Normalstrahlengang,

Fig. 8a den Strahlengang eines Stereomikroskops einer Strahlenumlenkvorrichtung, wobei die Umlenkspiegel zwischen verschwenkbarem Hauptobjektiv und dem Rest der Instrumentenoptik angeordnet sind, in der Stellung bei umgelenktem Strahlengang,

Fig. 8b die Geräte nach Fig. 8a in der Stellung bei Normal-Strahlengang,

Fig. 9 den Strahlengang eines Stereomikroskopes mit einer Strahlenumlenkvorrichtung mit variablem seitlichem Betrachtungswinkel in einer ersten Ausführungsform, in der Stellung bei umgelenktem Strahlengang,

Fig. 10 den Strahlengang eines Stereomikroskops mit einer Strahlenumlenkvorrichtung mit variablem seitlichen Betrachtungswinkel in einer zweiten Ausführungsform,

Fig. 11a bei einer dritten Ausführungsform mit variablem seitlichem Betrachtungswinkel eine andere Steuerung der Umlenkspiegel und des Hauptobjektives,

Fig. 11b eine andere Variante der Vorrichtung nach Fig. 11a,

Fig. 12 zeigt den Strahlengang eines Stereomikroskops mit einer Strahlenumlenkvorrichtung von der Art von Fig. 10, wobei die Speigelbewegungen von durch Mikroprozessoren gesteuerten Motoren hergeleitet werden,

Fig. 13 zeigt den Strahlengang eines Stereomikroskops einer Strahlenumlenkvorrichtung von der Art nach Fig. 12, mit einem anderen elektronischen Steuer- und Antriebssystem,

Fig. 14 zeigt den Strahlengang eines Stereomikroskops einer anderen Variante einer Strahlenumlenkvorrichtung mit einem elektronischen Steuer- und Antriebssystem,

Fig. 15 zeigt den Strahlengang eines Stereomikroskops mit einer weiteren Variante einer Strahlenumlenkvorrichtung mit einem elektronischen Steuer- und Antriebssystem und

Fig. 16 zeigt den Strahlengang eines Stereomikroskops mit einer wieder anderen Variante einer Strahlenumlenkvorrichtung mit einem elektronischen Steuer- und Antriebssystem.

Allen Ausführungsformen ist, gemäss der allgemeinen Systembedingung, gemeinsam, dass der genannte Schnittpunkt der optischen Achsen beider Strahlengänge mit dem axialen Objektpunkt 8 koinzidiert. Darüberhinaus ist bei den Varianten mit Korrektur-Einrichtungen zur Vermeidung des Nachfokussierens nach dem Wechsel von einem Strahlengang zum anderen, gemäss der allgemeinen Korrekturbedingung, dieser axiale Objektpunkt 8 der Brennpunkt beider Strahlengänge.

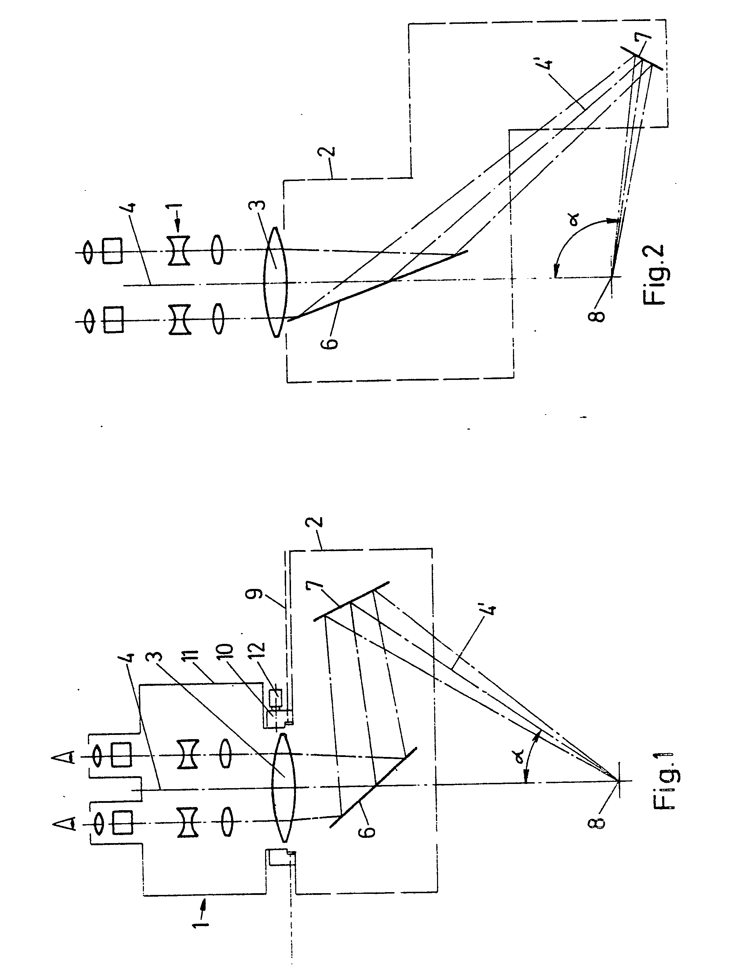

Bei der in Fig. 1 gezeigten schematischen Darstellung des Strahlenganges einer Variante einer an einem Stereomikroskop 1 angesetzten Strahlenumlenkvorrichtung ist in einem Gehäuse in seiner Stellung für den umgelenkten Strahlengang gegenstandsseitig benachbart zum Hauptobjektiv 3 des Stereomikroskops 1 unter einem Winkel zur optischen Achse 4 des Normalstrahlenganges ein beobachterseitiger Umlenkspiegel 6 montiert. In einem Abstand von diesem ist in demselben Gehäuse 2 ein gegenstandsseitiger Umlenkspiegel 7, in den meisten Fällen nicht parallel zum Umlenkspiegel 6, angeordnet. Die Winkelstellung zueinander bzw. zur optischen Achse 4 und der Abstand der beiden Umlenkspiegel 6 und 7 ist, ausser von den allgemeinen Systembedingungen, abhängig vom seitlichen Betrachtungswinkel $\alpha$, unter dem der Gegenstand (nicht gezeichnet – repräsentiert durch den axialen Objektpunkt 8) betrachtbar sein soll. Das Gehäuse 2 ist verschiebbar in einer Führung 9 eingesetzt, wobei diese drehbar um die optische Achse 4 des Hauptobjektives 3 in einem Haltering sitzt, mit welchem die Strahlenumlenkvorrichtung an z.B. einem Mikroskopgehäuse 11 mit einer Klemmschraube 12 befestigt ist.

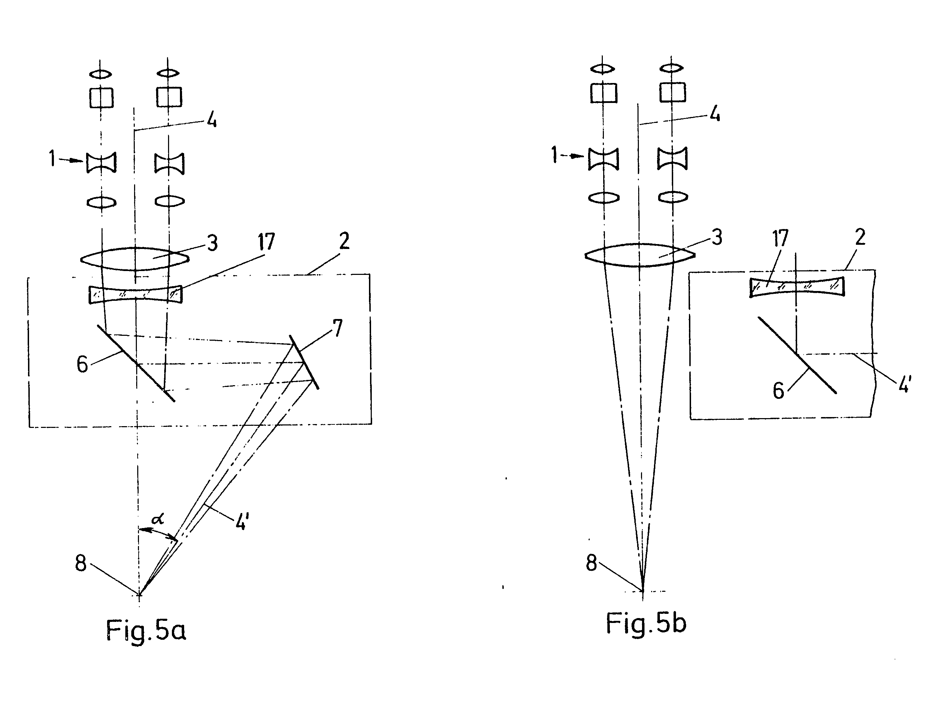

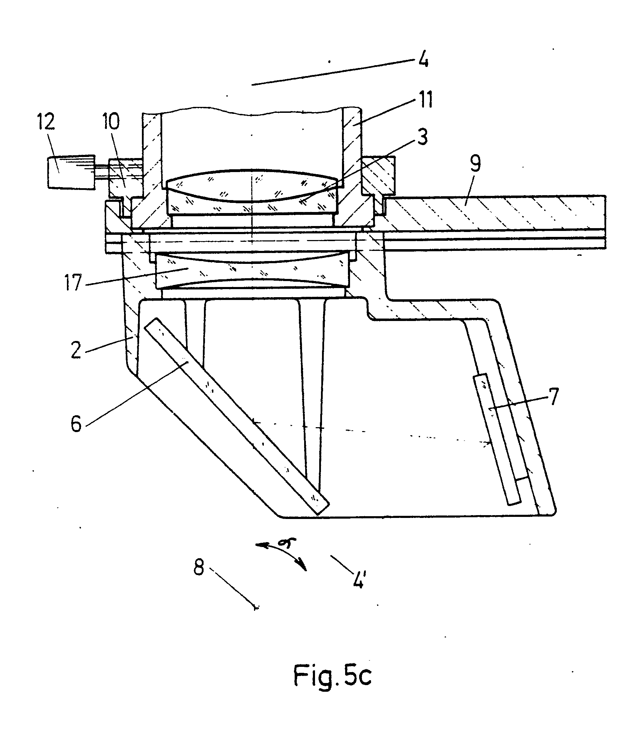

Bei dieser Ausführungsform einer Strahlenumlenkvorrichtung ist, soll nach der Betrachtung des Gegenstandes mit dem Normalstrahlengang eine seitliche Betrachtung durch Einschieben des Gehäuses 2 in den Normalstrahlengang und Schwenken desselben in die gewünschte Betrachtungslage vorgenommen werden, erneutes Fokussieren erforderlich. Dies verändert aber wieder den Arbeitsabstand zwischen Gegenstand und Unterkante-Gerät. Bei einer Anzahl von Arbeiten wird dies tolerierbar sein. Bei Nichttolerierbarkeit wird man Ausführungsformen einsetzen, bei welchen Korrekturmassnahmen dafür getroffen wurden, beispielsweise in der Art der Ausführungsformen nach Fig. 5, 6, 7, 8, 9, 10, 11, 12, 13, 14, 15, 16.

Bei der in Fig. 2 schematisch dargestellten und an ein Stereomikroskop 1 angesetzten Strahlenumlenkvorrichtung mit im wesentlichen gleichen Aufbau wie die Vorrichtung nach Fig. 1 ist eine solche Stellung der Umlenkspiegel 6 und 7 zueinander und zur optischen Achse 4 des Hauptobjektives 3 gezeigt, mit der ein Gegenstand (nicht gezeichnet – repräsentiert durch den axialen Objektpunkt 8) seitlich von unten betrachtet werden kann. Eine solche Strahlenumlenkvorrichtung kann, wenn es die Platzverhältnisse unter den jeweiligen Instrumenten erlauben, beispielsweise mit einer Ausführungsform nach Fig. 1 auf einer gemeinsamen, beidseitig auskragenden Führung, bzw. im gleichen Gehäuse 2 angeordnet sein.

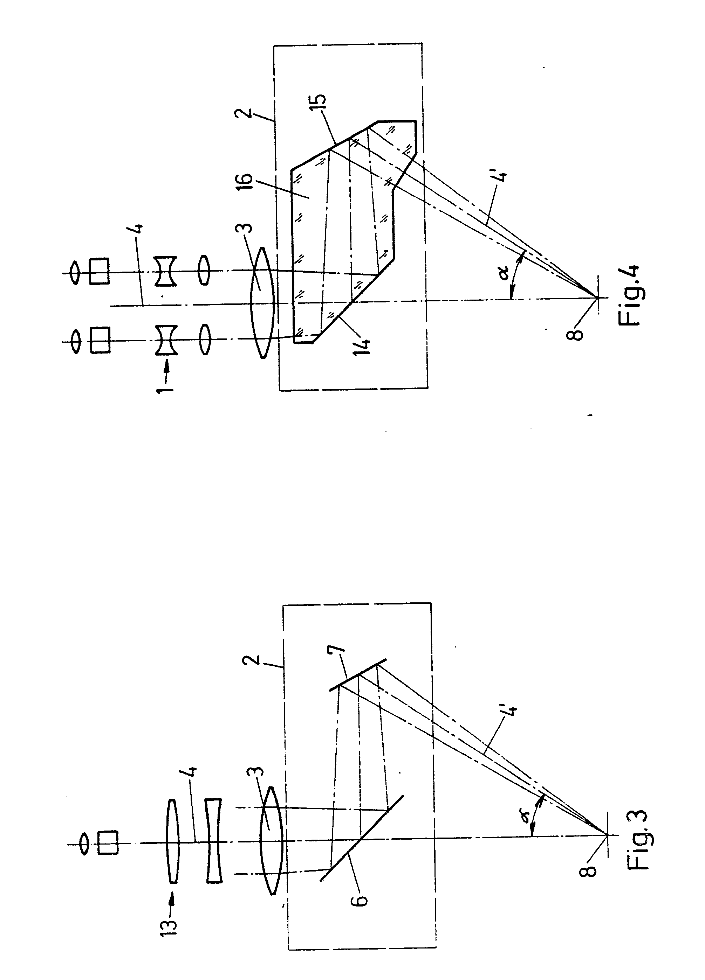

Bei der in Fig. 3 gezeigten Variante einer Strahlenumlenkvorrichtung für ein monokulares Mikroskop 13 besteht im wesentlichen Aufbau kein Unterschied zur Ausführungsform nach Fig. 1 für eine Anwendung an einem Stereomikroskop 1 oder an einem anderen optischen Instrument.

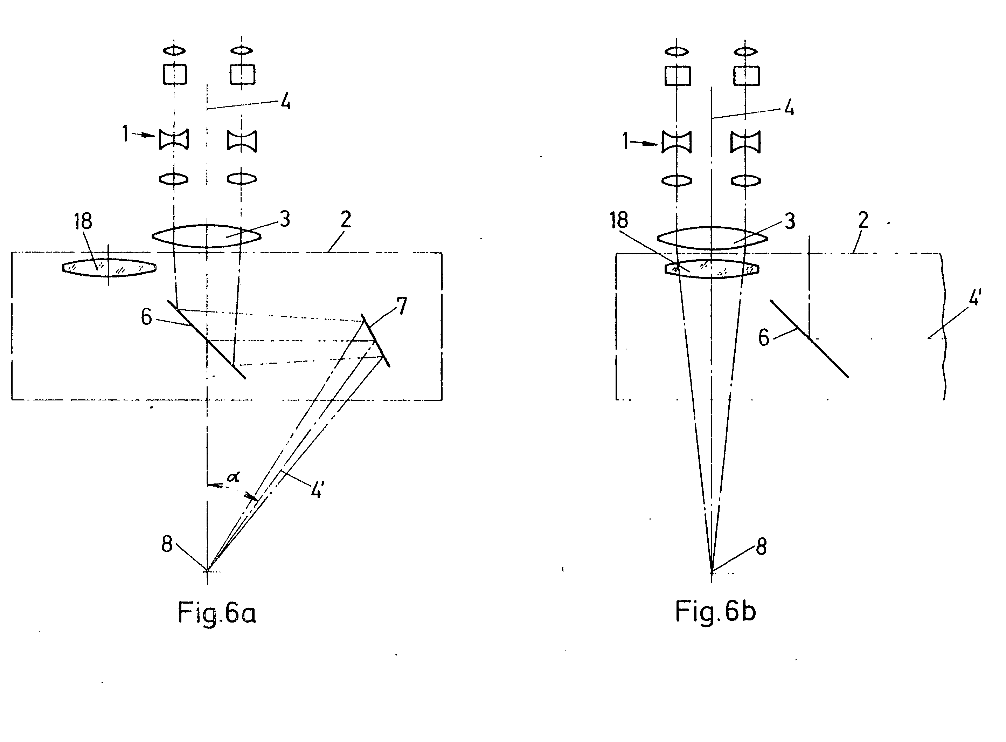

In Fig. 4 ist eine Ausführungsform einer Strahlenumlenkvorrichtung schematisch dargestellt, bei welcher die beiden Umlenkspiegel je von reflektierenden Flächen 14 bzw. 15 eines Prismas 16 gebildet werden. Alle anderen Merkmale können beispielsweise wie bei der Ausführungsform nach Fig. 1 oder aber wie bei einer der entsprechenden in den nachfolgenden Fig. 5, 6 dargestellten Varianten sein.

Werden an den Umlenkvorrichtungen optische Mittel als Korrektureinrichtungen oder Korrekturglieder vorgesehen, dessen Auslegung nach den allgemeinen Korrekturbedingungen erfolgt, d.h. dass der Schnittpunkt der optischen Achse 4 des Normalstrahlenganges mit der optischen Achse 4' des umgelenkten Strahlenganges der axiale Objektpunkt der optischen Systeme beider Strahlengänge ist, dann entfällt das Nachfokussieren, wodurch ein sehr rasches und einfaches Arbeiten, insbesondere bei industriellen Anwendungen, bei Fertigungskontrollarbeiten usw., möglich ist.

Eine weitere Form einer Strahlenumlenkvorrichtung ist in den Fig. 5a, 5b und 5c schematisch dargestellt. Bei dieser sind in einem verschiebbaren Gehäuse 2 die beiden Umlenkspiegel 6 und 7 nach den allgemeinen Systembedingungen und gemäss dem gewünschten seitlichen Betrachtungswinkel $\alpha$ montiert. Benachbart zum beob-

achterseitig angeordneten Umlenkspiegel 6 ist ein Korrekturglied, das als Negativlinse 17 ausgebildet ist, im Strahlengang der Strahlenumlenkvorrichtung montiert. Durch dieses Korrekturglied braucht beim Wechsel vom Normal- auf den umgelenkten Strahlengang nicht nachfokussiert werden.

Das Gehäuse 2 ist, wieder wie bei einer der vorhergehenden Ausführungsformen, in einer Schlittenführung 9 verschiebbar und diese in einem zur Klemmung am Mikroskopgehäuse 11 eingerichteten Haltering 10 drehbar gelagert und kann mit einer Schraube 12 festgestellt werden.

In den Fig. 6a und 6b ist eine andere Ausführungsform einer Strahlenumlenkvorrichtung schematisch dargestellt, bei welcher wieder in einem Gehäuse 2 zwei Umlenkspiegel 6 und 7 nach den allgemeinen Systembedingungen und gemäss dem gewünschten seitlichen Betrachtungswinkel α angeordnet sind. Benachbart zum beobachterseitigen Umlenkspiegel 6 ist bei dessen Rückseite parallel zur optischen Achse 4 des Normalstrahlenganges 3 als Korrekturglied eine Positivlinse 18 im Gehäuse 2 angeordnet. Auch bei dieser Ausführungsform ist das Gehäuse 2 in einer Schlittenführung 9 (nicht gezeichnet) verschiebbar und diese in einem zur Klemmung am Mikroskopgehäuse 11 eingerichteten Haltering 1a drehbar gelagert.

Steht die Strahlenumlenkvorrichtung in einer solchen Lage, dass sich der beobachtungsseitige Umlenkspiegel 6 im Strahlengang des Stereomikroskops 1 befindet, also der umgelenkte Strahlengang benutzt wird, dann liegt die Positivlinse 18 ausserhalb des benutzten Strahlenganges. Wird hingegen mit dem Normalstrahlengang gearbeitet, d.h. die beiden Umlenkspiegel 6 und 7 sind ausserhalb des Strahlenganges, dann befindet sich das Gehäuse 2 in einer Stellung, in der die Positivlinse 18 im Strahlengang liegt, wodurch kein Nachfokussieren beim Wechsel von Normal- zu umgelenktem Strahlengang erforderlich ist.

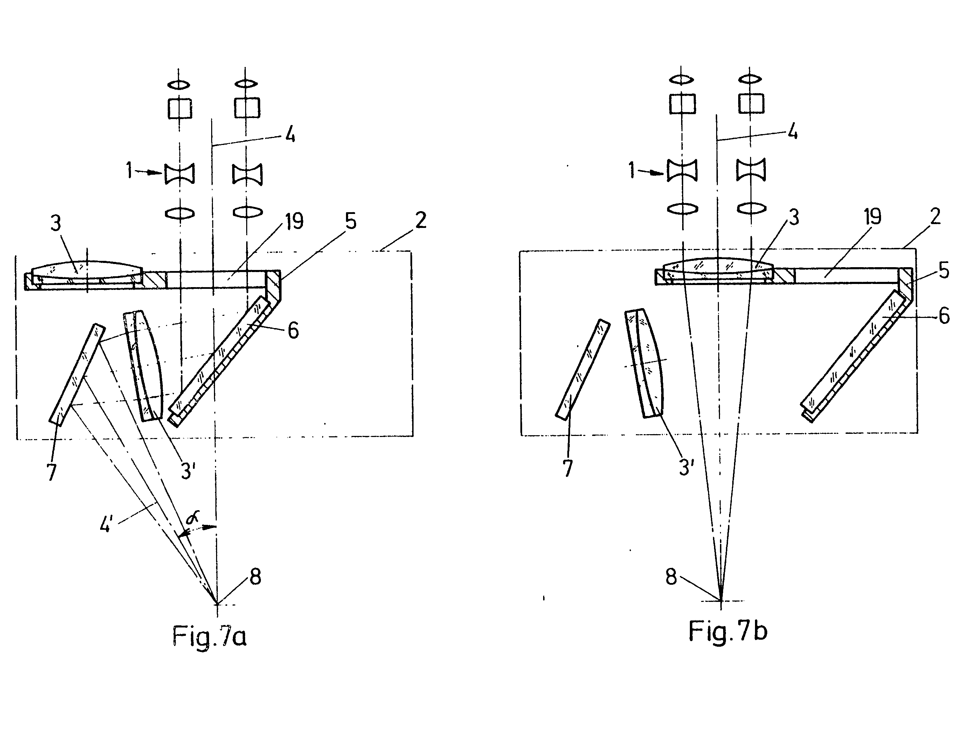

In den Fig. 7a und 7b ist eine Ausführungsvariante einer Strahlenumlenkvorrichtung für einen beispielsweisen Einbau in ein Stereomikroskop 1 beschrieben. Ein senkrecht zu den optischen Achsen des Stereomikroskops 1 im Gehäuse 2 verschiebbarer Spiegelschlitten 5 trägt einen beobachterseitigen Umlenkspiegel 6 und eine Aussparung 19 für den Durchtritt des Strahlenganges. Benachbart zu dieser Aussparung 19 ist auf dem Spiegelschlitten 5 ein Hauptobjektiv 3 des Stereomikroskops 1 montiert, welches für den Normalstrahlengang benutzt wird. Ein gegenstandsseitiger Umlenkspiegel 7 ist im Gehäuse 2 der Strahlenumlenkvorrichtung fest eingebaut. Zwischen diesen beiden Umlenkspiegeln 6 und 7 sitzt ein zweites Hauptobjektiv 3' des Stereomikroskops 1, so dass es bei eingeschobenem Spiegelschlitten 5 im umgelenkten Strahlengang liegt.

Bei dieser Ausführungsvariante ist die Korrektureinrichtung durch die beiden Hauptobjektive 3 und 3' realisiert, welche gemäss den allgemeinen und den speziellen Korrekturbedingungen wie beschrieben angeordnet sind.

Es wäre aber ebenso möglich, anstelle zweier Hauptobjektive 3 und 3' nur ein Hauptobjektiv 3 vorzusehen, wobei dieses so schwenkbar im Gehäuse 2 der Strahlenumlenkvorrichtung montiert ist, dass es bei eingeschobenem beobachtungsseitigen Umlenkspiegel 6 zwischen den Umlenkspiegeln positioniert und beim Normalstrahlengang in diesen unter die Restoptik des Stereomikroskops 1 geschwenkt ist.

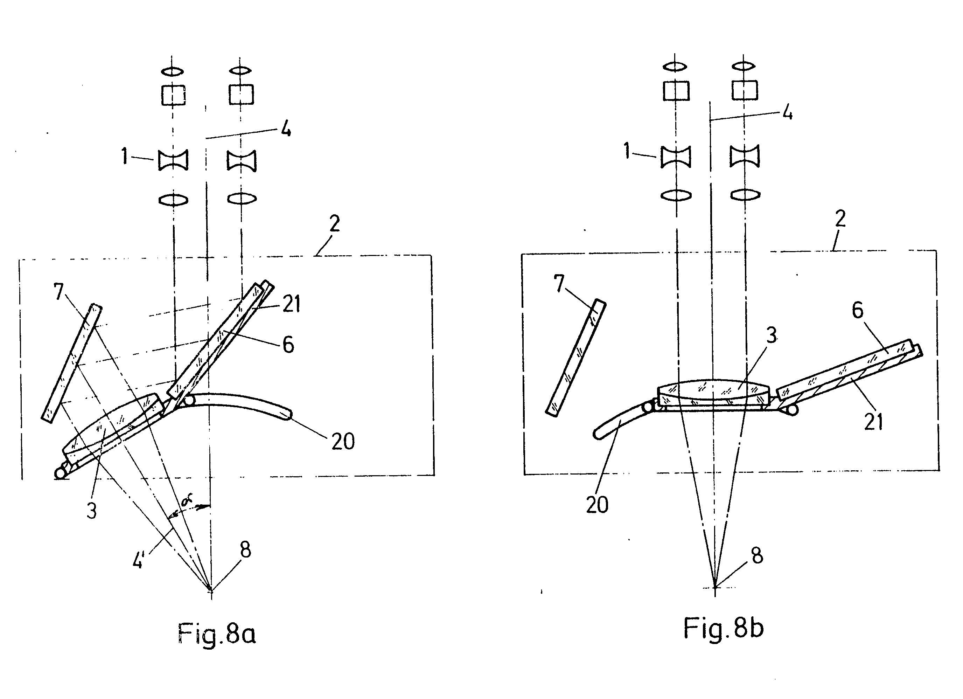

Die Fig. 8a und 8b zeigen eine weitere Ausführungsform einer Strahlenumlenkvorrichtung an einem Stereomikroskop 1. Die Vorrichtung weist einen in einer kreisbogenförmigen Schwenkführung 20 mit dem axialen Objektpunkt 8 als Mittelpunkt verschwenkbaren Optikhalter 21 auf, der einen beobachtungsseitigen Umlenkspiegel 6 und das Hauptobjektiv 3 des Stereomikroskops 1 trägt. Der gegenstandsseitige Umlenkspiegel 7 sitzt fest im Gehäuse 2 der Strahlenumlenkvorrichtung oder des Stereomikroskops 1. Die Lage der drei optischen Glieder, der Umlenkspiegel 6 bzw. 7 und des Hauptobjektivs 3 ist nach den allgemeinen Systembedingungen und gemäss dem gewünschten seitlichen Betrachtungswinkel α dadurch definiert, dass bei durch die Spiegel umgelenktem Strahlengang das Hauptobjektiv 3 zwischen Gegenstandspunkt 8 und gegenstandsseitigem Umlenkspiegel 6 angeordnet ist, wogegen beim Normalstrahlengang, bei welchem der beobachterseitige Umlenkspiegel 6 ausgeschwenkt ist, das Hauptobjektiv 3 allein im Strahlengang liegt.

Diese Ausführungsform weist als Korrektureinrichtung ein, nach den allgemeinen und einer der speziellen Korrekturbedingungen wie beschrieben angeordnetes, Hauptobjektiv 3 auf.

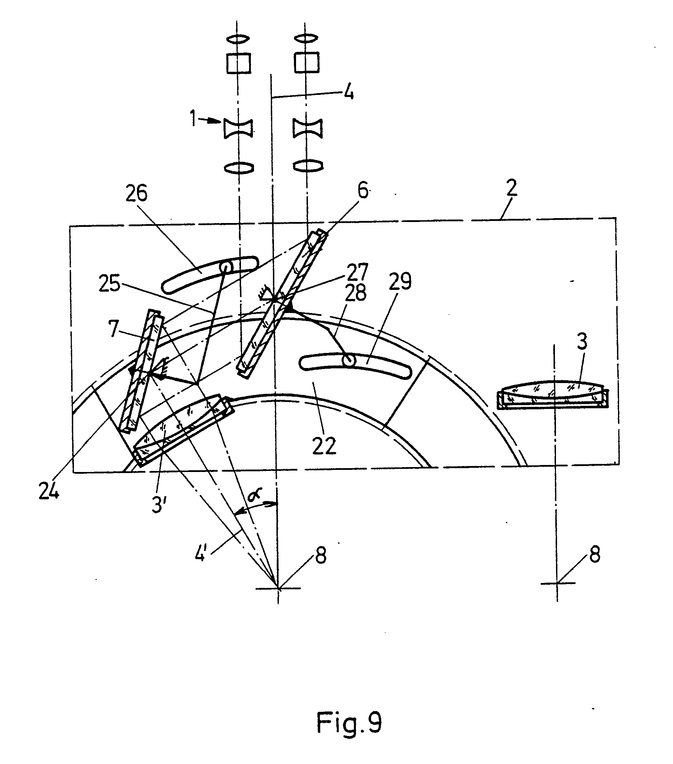

Eine erste Form einer Strahlenumlenkvorrichtung mit variablem seitlichem Betrachtungwinkel α ist in Fig. 9 schematisch dargestellt. Beispielsweise an einem Stereomikroskop 1 sitzt ein seitlich verschiebbares Gehäuse 2 für die Strahlenumlenkvorrichtung, welches einen um den axialen Objektpunkt 8 als Mittelpunkt schwenkbaren Objektivschlitten 22 trägt. Auf diesem ist das Hauptobjektiv 3' des Stereomikroskops 1 befestigt. Ausserdem ist, beobachterseitig benachbart zum Hauptobjektiv 3', ein gegenstandsseitiger Umlenkspiegel 7 auf dem Objektivschlitten 22 um eine die optische Achse des Hauptobjektives 3' senkrecht schneidende und senkrecht auf die durch die optische Achse 4' des umgelenkten Strahlenganges definierte Ebene stehende Achse 24 schwenkbar gelagert. Ein mit dem gegenstandsseitigen Umlenkspiegel 7 verbundener Lenker 25 ragt in eine im Gehäuse 2 fest angeordnete erste Steuerführung 26, womit er zwangsläufig in seiner Lage zum Hauptobjektiv 3' gemäss der Stellung des Objektivschlittens 22 einstellbar ist. Der beobachterseitige Umlenkspiegel 6 ist um eine gehäusefeste, zur Achse 24 des gegenstandsseitigen Umlenkspiegels 7 parallele Drehachse 27, welche die optische Achse 4 des Normalstrahlenganges senkrecht schneidet, verschwenkbar, wobei der beobachterseitige Umlenkspiegel 6 einen Lenker 28 aufweist, der in eine auf dem Objektivschlitten 22 angeordnete zweite Steuerführung 29 eingreift. Im Gehäuse ist benachbart zum Objektivschlitten 22 ein zweites Hauptobjektiv 3 vorgesehen, welches durch seitliches Verschieben des Gehäuses 2 ebenfalls in den Strahlengang des Mikroskops 1 gebracht werden kann, wobei dadurch der Normalstrahlengang realisiert ist.

Soll der Betrachtungswinkel α bei umgelenktem Strahlengang variiert werden, dann ist bei der Gehäusestellung für diesen der Objektivschlitten 22 zu verschieben, wobei durch die Lenker 25 und 28 und die Steuerführungen 26 und 29 die Umlenkspiegel 6 und 7 in die richtigen Lagen geführt bzw. gedreht werden.

Auch bei dieser Ausführungsvariante ist die Korrektureinrichtung durch die beiden Hauptobjektive 3 und 3' realisiert, welche gemäss den allgemeinen und speziellen Korrekturbedingungen wie beschrieben angeordnet sind.

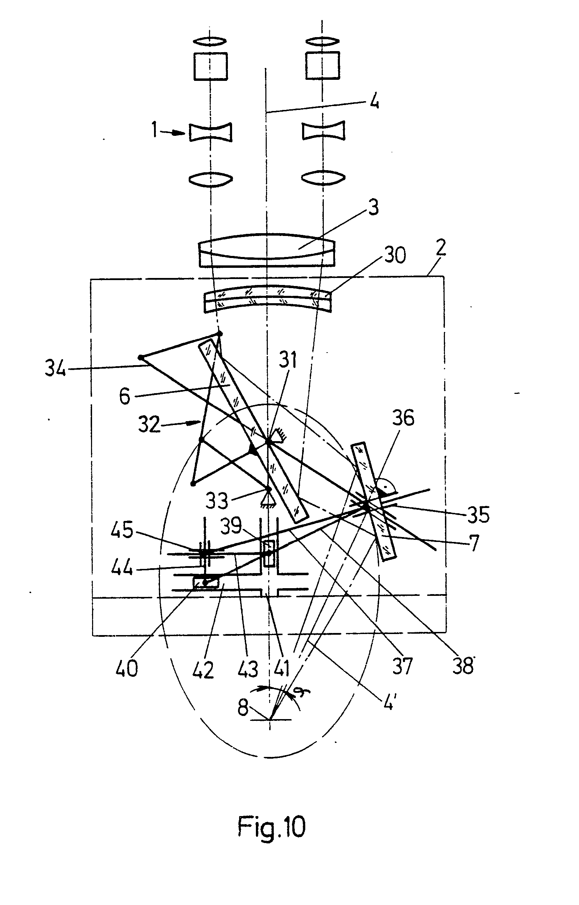

Eine weitere Ausführungsform einer Strahlenumlenkvorrichtung ist in Fig. 10, wieder beispielsweise für ein Stereomikroskop, dargestellt. In einem unter dem Stereomikroskop 1 verschiebbaren Gehäuse 2 für den umgelenkten Strahlengang ist ein optisches Korrekturglied 30, gemäss der allgemeinen Korrekturbedingung ausgelegt, und darunter ein um eine mit dem Gehäuse 2 fest verbundene und senkrecht auf die durch die optische Achse 4' des umgelenkten Strahlenganges definierte Ebene stehende Spiegeldrehachse 31, welche die optische Achse des Korrekturgliedes 30 senkrecht schneidet, drehbarer beobachterseitiger Umlenkspiegel 6 angeordnet. Diese Spiegeldrehachse 31 geht auch durch einen Brennpunkt einer in der durch die optische Achse 4' des umgelenkten Strahlenganges definierten Ebene liegenden Ellipse, deren zweiter Brennpunkt mit dem axialen Objektpunkt 8 zusammenfällt und die die Bahnellipse für den gegenstandsseitigen Umlenkspiegel 7 ist. Ein Winkelteilergetriebe 32 weist noch eine weitere gehäusefeste Drehachse 33 in der durch die optische Achse des Korrekturgliedes 30 und der Spiegeldrehachse 31 bestimmten Ebene auf. Einer der Lenker 34 des Winkelteilergetriebes 32 sitzt an seinem freien Ende in einer Gleitführung 35, welche drehbar um eine Achse 36 am gegenstandsseitigen Umlenkspiegel 7 montiert ist. Dieser ist mit einem Momentanpollenker 37 drehfest und mit dem Achsenlenker 38, an dessen einem Ende die Achse 36 sitzt, drehbar verbunden. Der Achsenlenker 38 weist an seinem anderen Ende einen und in einem Abstand von diesem einen weiteren drehbaren Gleitstein 39 bzw. 40 auf, welche in zwei zueinander senkrechten, im Gehäuse 2 angeordneten Führungen 41 bzw. 42 sitzen und eine stehende Kreuzschleife zur Realisierung eines Ellipsenführungsgetriebes bilden. Jeder der Gleitsteine 39 bzw. 40 weist einen senkrecht zu den Führungen 41, 42 abstehenden Führungsstab 43 bzw. 44 auf. Diese Führungsstäbe 43 und 44 sitzen an ihrer Kreuzungsstelle 45 verschiebbar in der Bohrung einer Achse, um die der Momentanpollenker 37 drehbar ist und den gegenstandsseitigen Umlenkspiegel 7 in der Tangentiallage an seine ellipsenförmige Bewegungsbahn hält.

Ist die Strahlenumlenkvorrichtung unter das Mikroskop 1, beispielsweise mittels Schlittenführung (nicht gezeichnet) eingeschoben, so liegt das optische Korrekturglied 30 koaxial zur optischen Achse des Hauptobjektives 3, also des Normalstrahlenganges, und bei Einstellung eines gewünschten seitlichen Betrachtungswinkels α, was mittels eines Einstellknopfes oder dgl. (nicht gezeichnet) erfolgen kann, werden die beiden Umlenkspiegel 6 und 7 in Abhängigkeit voneinander verstellt, wobei der gegenstandsseitige Umlenkspiegel 7 entlang einer Ellipse verschoben und der beobachterseitige Umlenkspiegel 6 um die Achse 31 gedreht wird. Dadurch bleibt die Einstelldistanz der Objektive für jeden seitlichen Betrachtungswinkel unverändert.

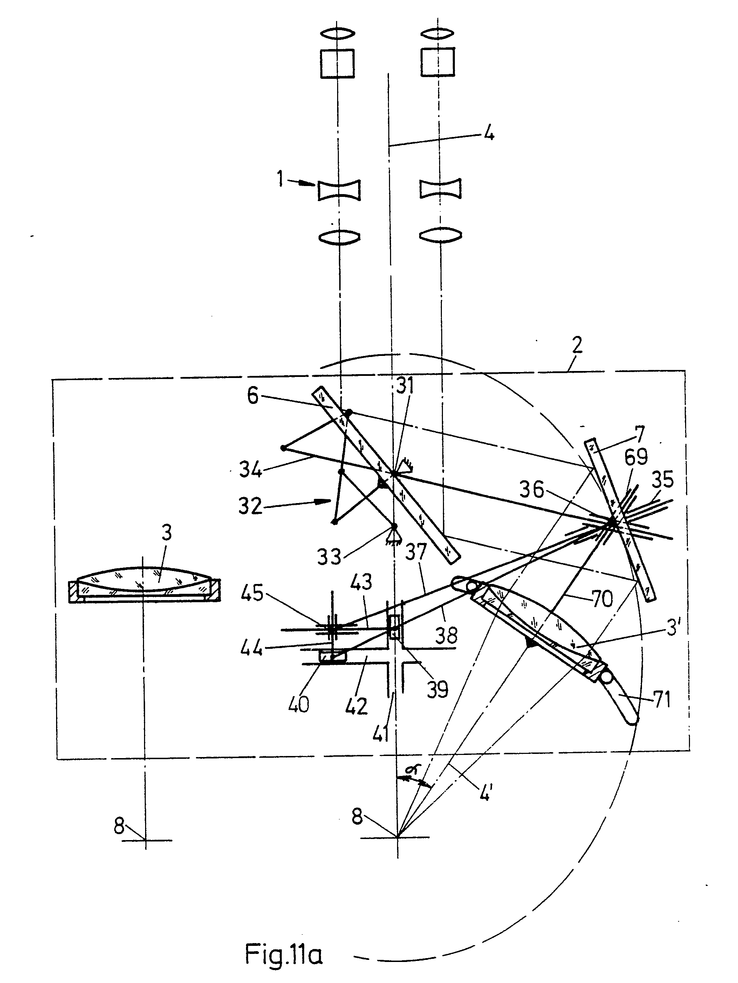

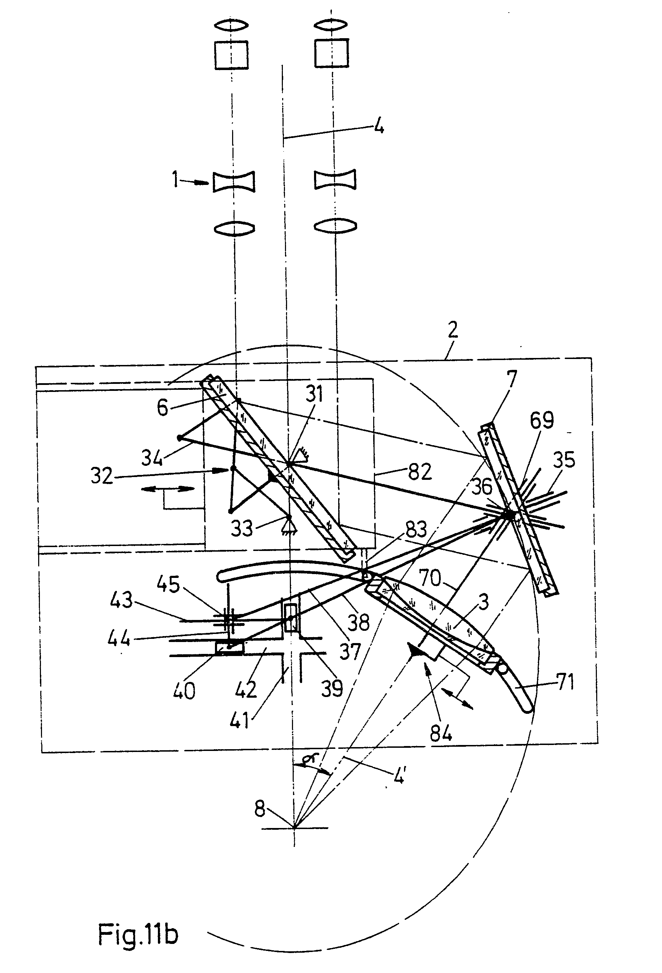

In der Fig. 11a ist eine, beispielsweise in ein Stereomikroskop 1 eingebaute, Strahlenumlenkvorrichtung mit variablem seitlichem Betrachtungswinkel α dargestellt, bei der in einem Gehäuse 2 ein beobachterseitiger Umlenkspiegel 6 um eine gehäusefeste Spiegeldrehachse 31 drehbar gelagert ist, welche durch den einen Brennpunkt einer Bahnellipse für den gegenstandsseitigen Umlenkspiegel 7 geht, die in der Ebene der optischen Achse 4' des umgelenkten Strahlenganges liegt und deren anderer Brennpunkt mit dem axialen Objektpunkt 8 zusammenfällt. Die Winkelteiler-, Ellipsen- und Tangentialführungs-Getriebe, welche die beiden Umlenkspiegel 6 und 7 verbinden, sind gleich wie bei der Vorrichtung nach Fig. 10 aufgebaut. Zusätzlich jedoch ist eine um die Achse 36 des gegenstandsseitigen Umlenkspiegels 7 drehbare Führung 69 angeordnet, in welcher ein Objektivlenker 70 mit seinem einen Ende verschiebbar ist. Das andere Ende ist starr mit der Objektivfassung des Hauptobjektives 3' verbunden, die in eine den axialen Objektpunkt 8, der zugleich der zweite Brennpunkt der Bahnellipse ist, als Mittelpunkt aufweisende, kreisbogenförmige, gehäusefeste Objektivführung 71 eingreift.

Die Korrektureinrichtung besteht bei dieser Variante gemäss der allgemeinen und den speziellen Korrekturbedingungen aus zwei Hauptobjektiven 3 und 3', wovon das dem Normalstrahlengang zugeordnete – 3' – benachbart der Rückseite des beobachterseitigen Umlenkspiegels 6 im Gehäuse angeordnet ist.

Für die Beobachtung mit dem Normalstrahlengang wird das Gehäuse 2 aus der in der Zeichnung dargestellten Stellung für umgelenkten Strahlengang verschoben und dadurch werden die Umlenkspiegel 6 und 7 samt verschwenkbarem Hauptobjektiv 3' aus dem Strahlengang des Mikroskops 1 und das Hauptobjektiv 3 in diesen gebracht.

Zur Beobachtung mit variierendem Betrachtungswinkel wird die Strahlenumlenkvorrichtung eingerückt und mit einem Hebel oder dergleichen, der an einem der Elemente des kinematischen Getriebes angreift, der gewünschte Winkel eingestellt.

In Fig. 11b ist eine abgewandelte Form der in Fig. 11a dargestellten Strahlenumlenkvorrichtung angegeben, welche nur ein Hauptobjektiv 3 für den Normal- und den umgelenkten Strahlengang aufweist und dementsprechend einerseits der beobachterseitige Umlenkspiegel 6 aus dem Normalstrahlengang ausschiebbar und andererseits das Hauptobjektiv 3 nicht nur für verschiedene Betrachtungswinkel α, sondern auch in den Normalstrahlengang schwenkbar ist.

Im fest mit dem optischen Instrument verbundenen Gehäuse 2 ist quer zur optischen Achse 4 des Normalstrahlenganges bzw. des Instrumentes verstellbar ein Schieber 82 angeordnet, welcher eine Spiegeldrehachse 31 des beobachterseitigen Umlenkspiegels 6 trägt. Diese Spiegeldrehachse 31 steht senkrecht auf der durch die optische Achse 4' des umgelenkten Strahlenganges definierten Ebene der Bahnellipse für den gegenstandsseitigen Umlenkspiegel 7 und geht durch deren einen Brennpunkt, wobei in deren anderem Brennpunkt der axiale Objektpunkt 8 liegt. Der beobachterseitige Umlenkspiegel 6 ist mit dem gegenstandsseitigen Umlenkspiegel 7, wie in der Ausführungsform nach Fig. 11a, durch ein Winkelteilergetriebe 32 verbunden, wobei der letztgenannte Spiegel von einem Ellipsen- und Tangentialführungsgetriebe 36-45 entlang der Bahnellipse und tangential an diese geführt ist.

An diesem gegenstandsseitigen Umlenkspiegel 7 ist ein Obektivlenker 70 schwenkbar und verschiebbar angeordnet, der mit einem Objektivträger für das Hauptobjektiv 3 drehfest, aber mittels einer Kupplung 84 für den Wechsel vom Normal- zum umgelenkten Strahlengang entkuppelbar verbunden ist. Dieser Hauptobjektivträger greift in eine kreisbogenförmige Führung 71, mit dem axialen Objektpunkt 8 als Mittelpunkt, ein, von der in der einen Endlage das Hauptobjektiv 3 in seiner Position für den Normalstrahlengang gehalten ist. Ausserdem greift der Hauptobjektivträger an einem Ausrückmittel 83, welches am Schieber 82 angeordnet ist, zum Wechsel vom umgelenkten Strahlengang in den Normalstrahlengang oder umgekehrt, an.

Die Korrektureinrichtung ist nach den allgemeinen und einer der speziellen Korrekturbedingungen bei dieser Vorrichtung als ein Hauptobjektiv 3 ausgelegt.

Die Einstellung des gewünschten Strahlenganges oder des gewünschten Beobachtungswinkels α an der Strahlenumlenkvorrichtung erfolgt mittels eines mit einem ihrer Elemente in Wirkverbindung stehenden Hebels oder dergleichen (nicht gezeichnet).

Diese Ausführungsform einer Strahlenumlenkvorrichtung eignet sich vorzugsweise für einen permanenten Einbau in ein optisches Instrument.

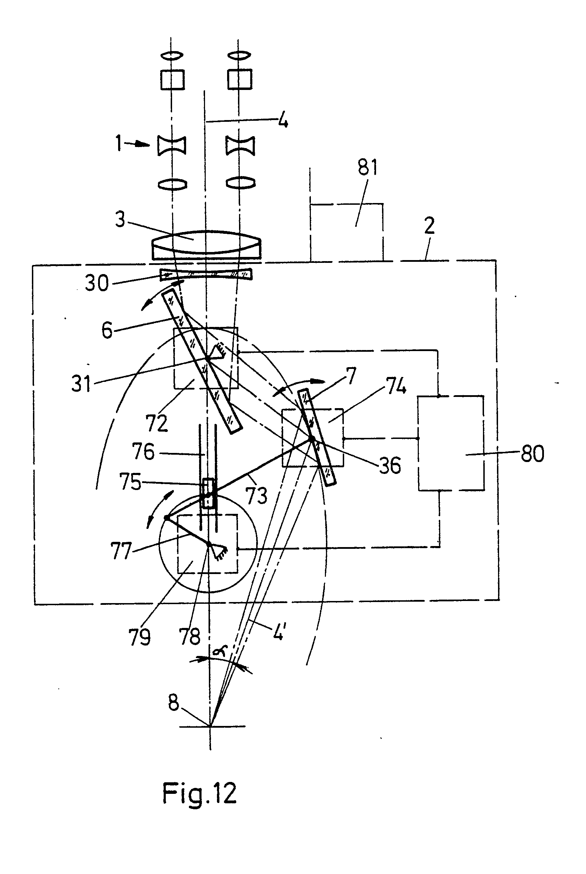

Eine andere Ausführungsform einer Strahlenumlenkvorrichtung mit variablem seitlichen Betrachtungswinkel α zur Verwendung an einem Stereomikroskop 1 ist schematisch in Fig. 12 dargestellt.

In einem quer zur optischen Achse des Mikroskops 1 verschiebbaren Gehäuse 2 ist um eine senkrecht zur optischen Achse eines Korrekturgliedes 30 liegende gehäusefeste senkrecht zur, durch die optische Achse 4' des umgelenkten Strahlenganges definierten, Ebene stehende und durch einen Brennpunkt einer Bahnellipse für den gegenstandsseitigen Umlenkspiegel 7 gehende Spiegeldrehachse 31 ein beobachterseitiger Umlenkspiegel 6 drehbar gelagert, wobei diese Spiegeldrehachse 31 mit einem ersten Motor 72 verbunden ist. Der zweite Brennpunkt der Bahnellipse fällt mit dem axialen Objektpunkt 8 zusammen. Der gegenstandsseitige Umlenkspiegel 7 ist drehbar an einem Kurbellenker 73 gelagert, wobei seine Achse mit einem zweiten Motor 74 gekuppelt ist. Der Kurbellenker 73 trägt einen Gleitstein 75, der sich in seiner Führung 76, welche in einer Ebene mit der optischen Achse des Korrekturgliedes 30 liegt, bewegt, und eine Drehkurbel 77 mit einer gehäusefesten Drehachse 78, die ebenfalls in einer durch die optische Achse des Korrekturgliedes 30 gehenden Ebene liegt und mit einem dritten Motor 79 verbunden ist.

Die beiden Spiegeldrehachsen 31 und 36 und die Kurbeldrehachse 78 tragen Messwertgeber (nicht gezeichnet), die, wie die drei Motoren 72, 74 und 79 mit einer ersten elektronischen Steuereinrichtung 80 verbunden sind. Diese Steuereinrichtung 80 bewirkt die Verstellungen der beiden Umlenkspiegel 6 und 7 in Abhängigkeit vom veränderbaren seitlichen Betrachtungswinkel α und den allgemeinen Systembedingungen mit Mitteln der Digitalelektronik, wobei der zweite Umlenkspiegel 7 entlang der Ellipsenbahn geführt und in jedem Punkt tangential zu ihr eingestellt wird.

In der Stellung für den umgelenkten Strahlengang fällt die optische Achse des Korrekturgliedes 30 mit der optischen Achse des Instrumentes, d.h. der optischen Achse 4 des Normalstrahlenganges, zusammen, und das Korrekturglied 30, welches nach der allgemeinen und einer speziellen Korrekturbedingung ausgelegt ist, befindet sich im beobachterseitigen Bereich des umgelenkten Strahlenganges benachbart der beobachterseitigen reflektierenden Fläche 6.

Zur seitlichen Verstellung der Strahlenumlenkvorrichtung gegenüber dem Mikroskop 1, um von der Benützungsart mit Normalstrahlengang in die Benützungsart mit umgelenktem Strahlengang zu wechseln, ist eine motorische Verstellvorrichtung 81 vorgesehen, welche auch eine Drehung der Vorrichtung um die optische Achse des Mikroskops 1 vornimmt.

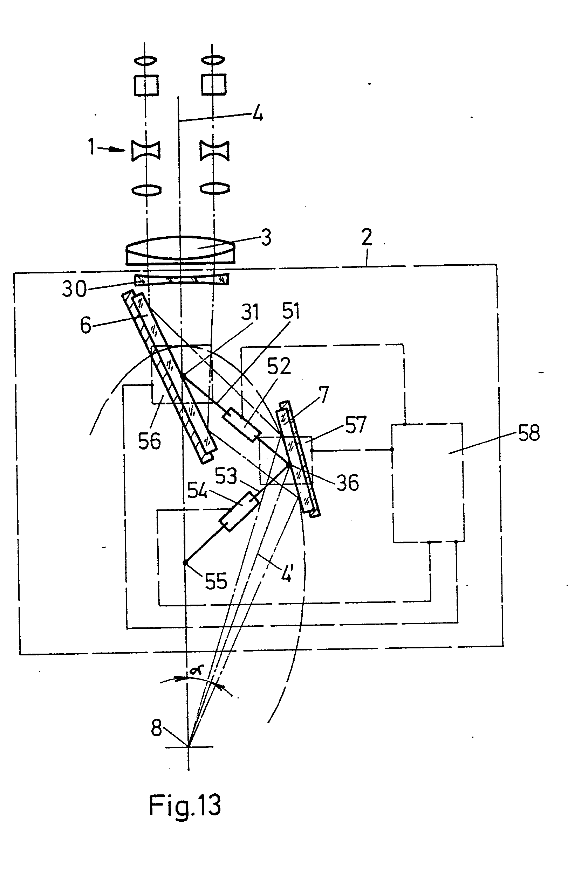

Eine wieder andere Ausführungsform einer Strahlenumlenkvorrichtung mit elektronischer Steuerung bei beispielsweiser Verwendung an einem Stereomikroskop 1 zeigt die Fig. 13.

In einem quer zur optischen Achse des Stereomikroskops 1 verschiebbaren Gehäuse 2 einer Strahlenumlenkvorrichtung ist um eine gehäusefeste, senkrecht zur optischen Achse eines Korrekturgliedes 30 und senkrecht zur durch die optische Achse 4' des umgelenkten Strahlenganges definierten Ebene stehende und durch einen Brennpunkt einer Bahnellipse für den gegenstandsseitigen Umlenkspiegel 7 gehende Spiegeldrehachse 31 ein beobachterseitiger Umlenkspiegel 6 drehbar gelagert. Der zweite Brennpunkt der Bahnellipse fällt mit dem axialen Objektpunkt 8 zusammen. An einem gehäusefesten Punkt, z.B. dieser Spiegeldrehachse 31, ist ausserdem ein erster zweiteiliger Führungsstab 51 angelenkt, dessen zwei Teile zueinander durch einen Linearmotor 52 motorisch verstellbar sind, und dessen verschiebbarer Teil den gegenstandsseitigen Umlenkspiegel 7, drehbar um eine Achse 36, trägt. An dieser Achse ist ein zweiter zweiteiliger Führungsstab 53 mit einem Linearmotor 54 angelenkt, dessen anderes Ende auf einer gehäusefesten Achse 55, in einem Abstand zur Spiegeldrehachse 31, gelagert ist. Diese und die Achse 36 ist je mit einem Motor 56 bzw. 57 verbunden, welche die Umlenkspiegel 6 bzw. 7 in die den allgemeinen Systembedingungen und gemäss dem gewünschten seitlichen Betrachtungswinkel α entsprechende Stellung bringen. Dabei wird der zweite Umlenkspiegel 7 auf einer Ellipsenbahn geführt und steht in jeder seiner Lagen tangential an die Bahnellipse. Alle Motoren 56 und 57 und alle Linearmotoren 52 und 53 weisen Winkel- bzw. Längengeber (nicht gezeichnet) auf, welche alle an eine elektronische Steuereinrichtung 58 angeschlossen sind, die mit Programmen diese Bewegungen steuert. Die Korrektureinrichtung ist wieder als ein Korrekturglied 30 gemäss der allgemeinen und einer speziellen Korrekturbedingung ausgelegt.

Durch Seitwärtsverschieben des Gehäuses 2 wird das Korrekturglied 30 koaxial zur optischen Achse 4 des Normalstrahlenganges gestellt und so der Wechsel von diesem auf den umgelenkten Strahlengang vollzogen.

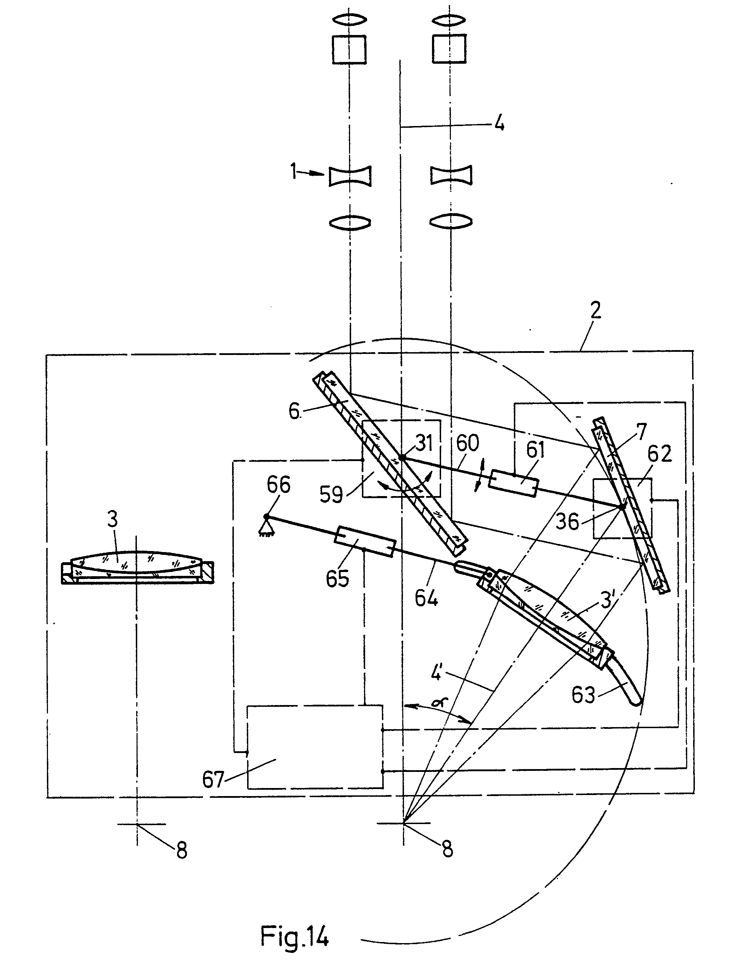

Wieder eine andere Variante einer Strahlenumlenkvorrichtung mit variablem seitlichen Betrachtungswinkel, die mit einem Stereomikroskop 1 verwendet werden kann, wie in Fig. 14 dargestellt, weist in einem quer zur optischen Achse des Stereomikroskops 1 verschiebbaren Gehäuse 2 einen um eine gehäusefeste Spiegeldrehachse 31, welche auf der durch die optische Achse des umgelenkten Strahlenganges definierten Ebene der Bahnellipse senkrecht steht und durch deren einen Brennpunkt geht, schwenkbaren beobachterseitigen Umlenkspiegel 6 auf, der mit einem Motor 59 verbunden ist. Um die Spiegeldrehachse 31 schwenkbar ist ein erster zweiteiliger Lenker 60, dessen beide Teile durch einen ersten Linearmotor 61 gekoppelt sind. Der Lenker 60 ist über ein 1:2-Zahnradgetriebe (nicht gezeichnet) mit dem Motor 59 verbunden. Der zweite Teil dieses Lenkers 60 trägt an seinem Ende um eine Achse 36 drehbar den gegenstandsseitigen Umlenkspiegel 7, dessen Achse 36 mit einem Motor 62 gekuppelt ist. Benachbart zu diesem Umlenkspiegel 7, bei umgelenktem Strahlengang in diesem liegend, ist ein Hauptobjektiv 3' mit seiner Fassung in einer gehäusefesten kreisförmigen Objektivführung 63 mit dem axialen Objektpunkt 8 als Mittelpunkt angeordnet, wodurch dieses Hauptobjektiv 3' um die Achse durch den axialen Objektpunkt 8, der sich auf der optischen Achse des Mikroskops 1 bei Normalstrahlengang und im zweiten Brennpunkt der Bahnellipse befindet, schwenkbar ist. An der Fassung des Hauptobjektives 3' ist ein zweiteiliger Stab 64 mit seinem einen Teil angelenkt. Die beiden Teile des Stabes 64 sind durch einen Linearmotor 65 miteinander gekoppelt, wobei der andere Teil des Stabes 64 um eine gehäusefeste Achse 66 schwenkbar ist.

Die beiden Linearmotoren 61 und 65 sowie die beiden Motoren 59 und 62 und die mit diesen in Wirkverbindung stehenden (nicht gezeichneten) Winkel- und Längengeber sind mit einer elektronischen Steuereinheit 67 verbunden, welche die Stellung der beiden Umlenkspiegel 6 und 7 und des einen Hauptobjektivs 3' zueinander mit Programmen gemäss den allgemeinen System- und Korrekturbedingungen steuert, wobei der gegenstandsseitige Umlenkspiegel 7 auf einer Ellipsenbahn und tangential zu dieser geführt wird.

Benachbart zu dem Optiksystem für den umgelenkten Strahlengang ist ein zweites Hauptobjektiv 3 im Gehäuse 2 so montiert, dass durch Verschieben des Gehäuses 2 quer zur optischen Achse des Mikroskops 1 das Hauptobjektiv 3 in den Normalstrahlengang eingeschoben wird.

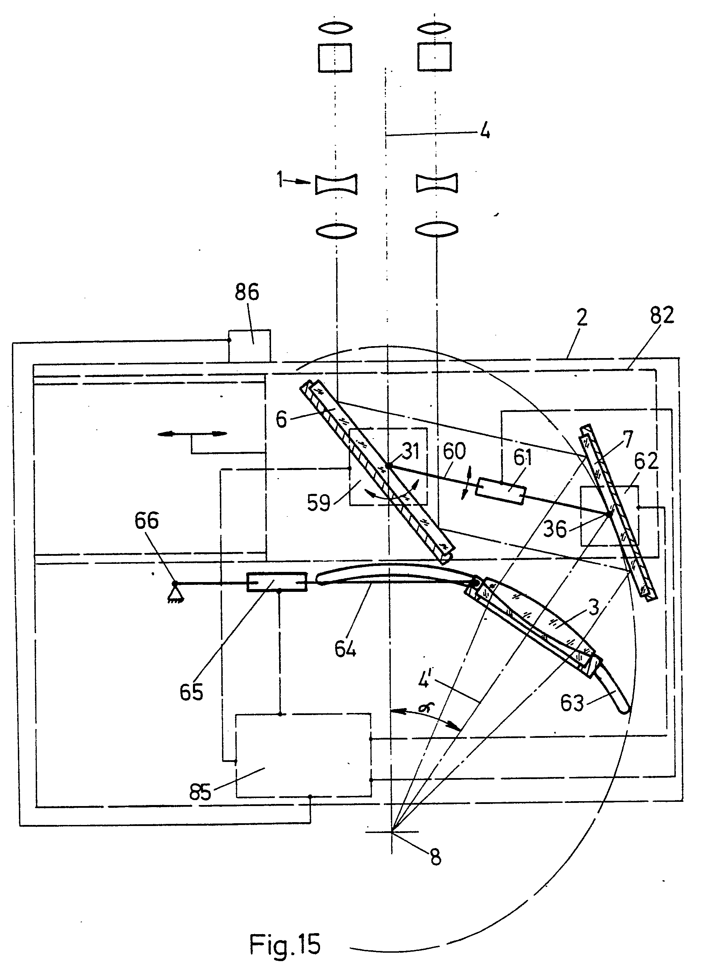

Die in Fig. 15 dargestellte Variante einer Strahlenumlenkvorrichtung weist einen im fest mit dem Mikroskop 1 verbundenen Gehäuse 2 sitzenden Schieber 82 auf, der eine Spiegeldrehachse 31 für einen beobachterseitigen Umlenkspiegel 6 trägt. Diese Spiegeldrehachse 31 steht senkrecht auf der durch die optische Achse 4' des umgelenkten Strahlenganges definierten Ebene, in der die Bahnellipse eines gegenstandsseitigen Umlenkspiegels 7 liegt, und schneidet, wenn sich die Strahlenumlenkvorrichtung in der Position des umgelenkten Strahlenganges befindet, die optische Achse des Mikroskops 1. Mit dieser Spiegeldrehachse 31 ist ein Motor 59 verbunden. An diesen Motor 59 ist ein (nicht gezeichnetes) Getriebe mit einer Übersetzung 1:2 und an dieses ein erster zweiteiliger, um die Spiegeldrehachse 31 schwenkbarer Lenker 60 angeschlossen, der an seinem anderen Ende um eine Achse 36 drehbar den gegenstandsseitigen Umlenkspiegel 7 trägt. Die beiden Teile des Lenkers 60 sind durch einen Linearmotor 61 gekoppelt. Auf der Achse 36 sitzt ein mit dem Umlenkspiegel 7 gekuppelter Motor 62. Im gegenstandsseitigen Bereich des umgelenkten Strahlenganges, benachbart zum Umlenkspiegel 7 ist das Hauptobjektiv 3 mit seiner Fassung in einer kreisbogenförmigen Objektivführung 63, mit dem axialen Objektpunkt 8, der zugleich der zweite Brennpunkt der Bahnellipse ist, als Mittelpunkt, gelagert, wobei sich diese Führung über die optische Achse des Mikroskops hinaus erstreckt, um das Hauptobjektiv 3 auch noch in der Position für den Normalstrahlengang zu halten. An der Objektivfassung greift ein zweiter zweiteiliger Lenker 64 an, der um eine gehäusefeste Achse 66 schwenkbar gelagert ist und dessen beide Teile mit einem Linearmotor 65 gekoppelt sind.

Die Motoren 59, 62, 61 und 65 stehen einerseits mit Winkel- bzw. Lineargebern (nicht gezeichnet) in Wirkverbindung und andererseits sind sie, wie die Winkel- und Lineargeber, mit einer elektronischen Steuereinrichtung 85 verbunden. Auch der Schieber 82 ist mit einem Stellmotor 86 gekoppelt, der an diese Steuereinrichtung 85 angeschlossen ist. Sie steuert mittels Programm die Bewegungen der einzelnen Optikelemente für den Normal- und den umgelenkten Strahlengang gemäss den allgemeinen System- und Korrekturbedingungen, wobei sich bei umgelenktem Strahlengang der gegenstandsseitige Umlenkspiegel 7 entlang einer Ellipse und tangential an diese bewegt, wenn mit verschiedenen Beobachtungswinkeln α gearbeitet wird. Die Korrektureinrichtung zur Vermeidung des Nachfokussierens nach einem Wechsel der Strahlengänge besteht aus dem Hauptobjektiv 3.

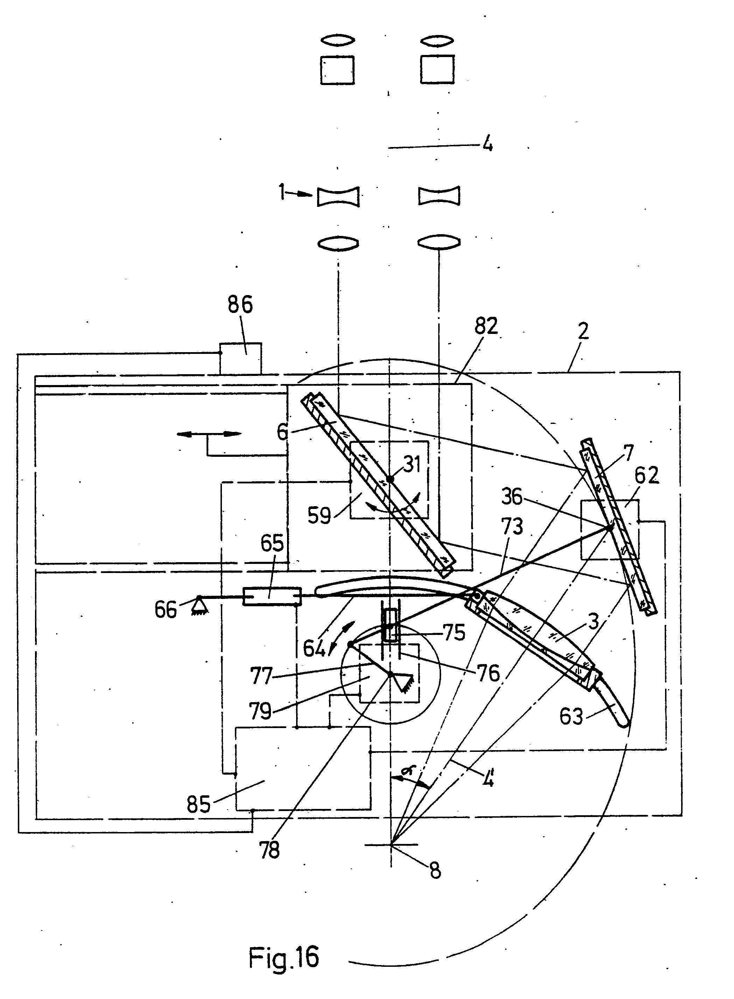

Fig. 16 zeigt eine weitere Variante einer Strahlenumlenkeinrichtung mit einem fest mit dem Mikroskop 1 verbundenen Gehäuse 2, in welchem ein Schieber 82 quer zur optischen Achse des Mikroskops 1 verschiebbar ist. Dieser Schieber 82 trägt einen, um eine zur durch die optische Achse 4' des umgelenkten Strahlenganges definierte Ebene, in der die Bahnellipse eines gegenstandsseitigen Umlenkspiegels 7 liegt, senkrecht stehende und durch einen Brennpunkt dieser Bahnellipse gehende Spiegeldrehachse 31 drehbaren beobachterseitigen Umlenkspiegel 6. Dieser ist mit einem Motor 59 verbunden. Der gegenstandsseitige Umlenkspiegel 7 ist ebenfalls mit einem Motor 62 und mit einem Kurbelschleifen-Ellipsenführungsgetriebe 73, 75, 76, 77, 78 verbunden, das mit einem Motor 79 gekuppelt ist. Gegenstandsseitig benachbart zum gegenstandsseitigen Umlenkspiegel 7 ist das Hauptobjektiv 3 angeordnet, dessen Objektivträger in einer kreisbogenförmigen Objektivführung 63, deren Mittelpunkt der axiale Objektpunkt 8 und zugleich der zweite Brennpunkt der Bahnellipse ist, gehalten und mit einem zweiteiligen Lenker 64 verbunden, der seinerseits am Gehäuse 2 angelenkt ist. Diese Führung erstreckt sich, zur Positionierung des Objektivs auch für den Normalstrahlengang, bis über die optische Achse des Mikroskops 1 hinaus. Die beiden Teile dieses Lenkers 64 stehen in Wirkverbindung mit einem Linearmotor 65. Die Spiegeldrehachsen 31, 36, der Lenker 64 und die Motorachse 78 stehen mit (nicht gezeichneten) Messwertgebern in Wirkverbindung, welche, wie die Motoren 59, 62, 65, 69, mit einer elektronischen Steuereinrichtung 85 zusammenwirken. An diese ist auch ein Motor 86 zur Verstellung des Schiebers 82 angeschlossen. Sie steuert mittels Programm die Bewegungen der einzelnen Systemelemente für den Normal- und den umgelenkten Strahlengang gemäss den allgemeinen System- und Korrekturbedingungen, wobei sich bei umgelenktem Strahlengang der gegenstandsseitige Umlenkspiegel 7 entlang einer Ellipse und tangential an diese bewegt, wenn mit verschiedenen Beobachtungswinkeln α gearbeitet wird.

Die Korrektureinrichtung zur Vermeidung des Nachfokussierens nach dem Wechsel von einem Strahlengang zum anderen besteht hier auch aus dem Hauptobjektiv 3.

Bei den Vorrichtungen nach den beiden Fig. 15 und 16 wird für einen Wechsel vom umgelenkten Strahlengang zum Normalstrahlengang, also ausgehend von der in der Fig. 16 dargestellten Situation, der beobachterseitige Umlenkspiegel 6 mit dem Schlitten 82 durch die Steuereinrichtung 85 und den Motor 86 aus dem Strahlengang des Mikroskops 1 und gleichzeitig das Hauptobjektiv 3 in der Objektivführung 63 in diesen Strahlengang geschoben. Der Antriebsmotor für den gegenstandsseitigen Umlenkspiegel 7 kann dabei abgeschaltet werden. Umgekehrt wird während dem Einrückvorgang des Schiebers 82 das Hauptobjektiv 3 aus dem Strahlengang des Mikroskops 1 bewegt und zusammen mit dem gegenstandsseitigen und dem beobachterseitigen Umlenkspiegel 7 bzw. 6 je in die den umgelenkten Strahlengang bildende und den allgemeinen System- und Korrekturbedingungen entsprechende Position gebracht.

Alle Strahlenumlenkvorrichtungen sind mit ihrem Gehäuse entweder an das optische Instrument ansetzbar oder in dieses eingebaut und in jedem Fall um die optische Achse des Instrumentes manuell oder motorisch drehbar montiert, um den Gegenstand von mehreren Seiten beobachten zu können.

Bei den Vorrichtungen nach den Fig. 8, 9, 11, 14, 15, 16 wird eine Vergrösserungsänderung zwischen den Abbildungen mit dem Normalstrahlengang und dem umgelenkten Strahlengang vermieden.

An der Strahlenumlenkvorrichtung kann auch eine koaxiale oder eine andere Beleuchtungseinrichtung angeordnet werden.

**Patentansprüche**

1. Strahlenumlenkvorrichtung für ein optisches Instrument, insbesondere ein Mikroskop beliebiger Art, um einen Gegenstand aus Richtungen abweichend vom im wesentlichen durch die optische Achse des Instruments gegebenen Normalstrahlengang zu betrachten, wobei diese Vorrichtung zwei reflektierende Flächen (6, 7) aufweist, die in den Normalstrahlengang einbringbar sind, dadurch gekennzeichnet, dass die zwei reflektierenden Flächen (6, 7) in einem Gehäuse (2) nach Lage und Abstand so zueinander angeordnet sind, dass in der Position für den umgelenkten Strahlengang dessen optische Achse (4') und die optische Achse des Normalstrahlengangs (4) sich in einem Punkt (8) schneiden, wobei dieser Schnittpunkt der axiale Objektpunkt des optischen Systems eines der beiden Strahlengänge ist, dass im Gehäuse (2) optische Mittel (16, 17) vorgesehen sind, durch welche dieser Schnittpunkt (8) auch zum axialen Objektpunkt des optischen Systems des anderen Strahlenganges gemacht wird, indem entweder:

a) die optischen Mittel ein Negativglied (17) oder eine planparallele Platte (16) sind, welche im Bereich des umgelenkten Strahlenganges angeordnet ist, oder
b) die optischen Mittel ein Positivglied (18) sind, das im gegenstandsseitigen Bereich des Normalstrahlengangs angeordnet ist, oder
c) die optischen Mittel zwei Hauptobjektive (3, 31) sind, von welchen eines dem Normalstrahlengang und eines dem gegenstandsseitigen Bereich des umgelenkten Strahlenganges zugeordnet ist.

2. Strahlenumlenkvorrichtung nach Anspruch 1, dadurch gekennzeichnet, dass eine Verstellvorrichtung zur Verstellung von Lage und Abstand der reflektierenden Flächen (6, 7) in Abhängigkeit vom seitlichen Betrachtungswinkel ($\alpha$) während der Beobachtung mit dem umgelenkten Strahlengang im Gehäuse (2) vorgesehen ist.

3. Strahlenumlenkvorrichtung nach Anspruch 2, dadurch gekennzeichnet, dass die Verstellvorrichtung zusätzlich zur Verstellung der optischen Mittel in Abhängigkeit vom seitlichen Betrachtungswinkel ($\alpha$) während der Beobachtung mit dem umgelenkten Strahlengang im Gehäuse (2) ausgebildet ist.

4. Strahlenumlenkvorrichtung nach Anspruch 1, dadurch gekennzeichnet, dass die optischen Mittel die als gekrümmte Flächen ausgebildeten reflektierenden Flächen (6, 7) sind.

5. Strahlenumlenkvorrichtung nach Anspruch 1, dadurch gekennzeichnet, dass jede reflektierende Fläche die Fläche eines Spiegels ist.

6. Strahlenumlenkvorrichtung nach Anspruch 1, dadurch gekennzeichnet, dass jede reflektierende Fläche die Fläche eines Prismas ist.

7. Strahlenumlenkvorrichtung nach Anspruch 1, dadurch gekennzeichnet, dass eine Zustellvorrichtung mit einem Antrieb (81, 86) vorgesehen ist, zum Wechsel von einer dem Normalstrahlengang entsprechenden Stellung in eine dem umgelenkten Strahlengang entsprechende Stellung.

8. Strahlenumlenkvorrichtung nach Anspruch 7, dadurch gekennzeichnet, dass die Zustellvorrichtung zum Wechsel vom Normalstrahlengang auf umgelenkten Strahlengang das quer zur optischen Achse des Normalstrahlenganges in diesen einschiebbare Gehäuse (2) ist.

9. Strahlenumlenkvorrichtung nach Anspruch 7, dadurch gekennzeichnet, dass die Zustellvorrichtung zum Wechsel vom Normalstrahlengang auf den umgelenkten Strahlengang ein im Gehäuse (2) angeordneter Schieber (5, 21, 82) ist.

10. Strahlenumlenkvorrichtung nach Anspruch 7, dadurch gekennzeichnet, dass der Antrieb der Zustellvorrichtung in einem kinematischen Getriebe (69, 70, 83) besteht, welches mit den Getrieben anderer Vorrichtungsmittel verbindbar und in Abhängigkeit von diesen steuerbar ist.

11. Strahlenumlenkvorrichtung nach Anspruch 7, dadurch gekennzeichnet, dass der Antrieb der Zustellvorrichtung eine elektronische Steuervorrichtung (81, 86), Motoren und Messwertgeber aufweist, welche mit entsprechenden Einrichtungen zur Steuerung anderer Vorrichtungsmittel verbunden und in deren Abhängigkeit gesteuert ist.

12. Strahlenumlenkvorrichtung nach den Ansprüchen 1(a) und 2, dadurch gekennzeichnet, dass die Verstellvorrichtung für die reflektierenden Flächen (6, 7) ein kinematisches Getriebe mit einem Ellipsenführungs-, Tangentialführungs- und Winkelteiler-Getriebe zur Einstellung der gegenseitigen Lage der reflektierenden Flächen (6, 7) aufweist, wobei die beobachterseitige reflektierende Fläche (6) um eine gehäusefeste Achse (31) durch einen Brennpunkt einer Ellipse, deren eine Achse mit der optischen Achse (4) des Normalstrahlenganges zusammenfällt und in deren anderem Brennpunkt der axiale Objektpunkt (8) liegt, drehbar, und die zweite reflektierende Fläche (7) tangential an einen Abschnitt dieser Ellipse geführt ist.

13. Strahlenumlenkvorrichtung nach den Ansprüchen 1(c) und 3, dadurch gekennzeichnet, dass die Verstellvorrichtung für die reflektierenden Flächen (6, 7) und die optischen Mittel im Gehäuse (2) einen entlang einer Kreisbahn mit dem axialen Objektpunkt (8) als Mittelpunkt verschiebbaren Objektivschlitten (22), der das Hauptobjektiv (3) trägt, aufweist, wobei benachbart zu diesem Hauptobjektiv (3) die gegenstandsseitige reflektierende Fläche (7) um eine schlittenfeste Achse (24) quer zur optischen Achse des Hauptobjektives (3) schwenkbar gelagert ist und an dieser reflektierenden Fläche (7) ein mit einer am Gehäuse (2) angeordneten zweiten Steuerführung (26) zusammenwirkender Lenker (25) angreift und auf dem Objektivschlitten (22) eine erste Steuerführung (29) vorgesehen ist, in welche ein Lenker (28) der beobachterseitigen reflektierenden Fläche (6), welche um eine gehäusefeste, quer zur optischen Achse des Normalstrahlenganges liegende und diese schneidende Drehachse (27) drehbar ist, eingreift.

14. Strahlenumlenkvorrichtung nach den Ansprüchen 1(c) und 3, dadurch gekennzeichnet, dass die Verstellvorrichtung für die reflektierenden Flächen (6, 7) und die optischen Mittel ein kinematisches Getriebe, das ein Ellipsenführungs-, Tangentialführungs- und Winkelteiler-Getriebe zur gegenseitigen Einstellung der reflektierenden Flächen und einen mit dem Träger der gegenstandsseitigen reflektierenden Fläche (7) zur schwenkenden Mitnahme des einen Hauptobjektivs (3) verbundenen Lenker (70) aufweist, wobei die beobachterseitige reflektierende Fläche (6) um eine gehäusefeste Achse (31) durch einen Brennpunkt einer Ellipse, deren eine Achse mit der optischen Achse (4) des Normalstrahlenganges zusammenfällt und in deren anderem Brennpunkt der axiale Objektpunkt (8) liegt, drehbar, die gegenstandsseitige reflektierende Fläche (7) tangential an einen Abschnitt dieser Ellipse geführt und das eine Hauptobjektiv (3) um den axialen Objektpunkt (68) schwenkbar ist.

15. Strahlenumlenkvorrichtung nach den Ansprüchen 3 und 9, dadurch gekennzeichnet, dass die Verstellvorrichtung für die reflektierenden Flächen (6, 7) und die optischen Mittel ein kinematisches Getriebe aufweist mit einem Ellipsenführungs-, Tangentialführungs- und Winkelteiler-Getriebe zur Einstellung der gegenseitigen Lage der reflektierenden Flächen (6, 7), wobei die beobachterseitige reflektierende Fläche (6) um eine mit einem am Gehäuse (2) angeordneten Schieber (82) festverbundene Achse (31) drehbar ist, welche durch einen Brennpunkt einer Ellipse, deren eine Achse mit der optischen Achse (4) des Normalstrahlenganges zusammenfällt und in deren anderem Brennpunkt der axiale Objektpunkt (8) liegt, geht und die gegenstandseitige reflektierende Fläche (7) tangential an einen Abschnitt dieser Ellipse geführt ist und einem Objektivführungsgetriebe, das mit einem der drei anderen Getriebe entkuppelbar verbunden ist und von dem das Hauptobjektiv (3) in einer dem jeweils eingestellten Strahlengang entsprechenden Position auf einem Kreisbogen mit dem axialen Objektpunkt (8) als Mittelpunkt gehalten ist.

16. Strahlenumlenkvorrichtung nach den Ansprüchen 1(a) und 2, dadurch gekennzeichnet, dass die Verstellvorrichtung für die reflektierenden Flächen eine elektronische Steuereinrichtung (58, 80) und ein mit den Trägern der reflektierenden Flächen (6, 7), mit Motoren (52, 54, 56, 57; 72, 74, 79) und mit Messwertgebern verbundenes Gestänge (51, 53; 73, 77) aufweist, wobei die beobachterseitige reflektierende Fläche (6) um eine gehäusefeste Achse (31) durch einen Brennpunkt einer Ellipse, deren eine Achse mit der optischen Achse (4) des Normalstrahlenganges zusammenfällt und in deren anderem Brennpunkt der axiale Objektpunkt (8) liegt, drehbar und die gegenstandsseitige reflektierende Fläche (7) tangential an einen Abschnitt dieser Ellipse geführt ist.

17. Strahlenumlenkvorrichtung nach den Ansprüchen 1(c) und 3, dadurch gekennzeichnet, dass die Verstellvorichtung für die reflektierenden Flächen (6, 7) und die optischen Mittel eine mit Motoren (59, 61, 62, 65) und Messwertgebern verbundene elektronische Steuereinrichtung (67) aufweist, wobei die Motoren und die Messwertgeber ihrerseits über ein Gestänge (60, 64) mit den Trägern der reflektierenden Flächen (6, 7) und dem Objektivträger zusammenwirken, wobei die beobachterseitige reflektierende Fläche (6) um eine gehäusefeste Achse (31) durch einen Brennpunkt einer Ellipse, deren eine Achse mit der optischen Achse (4) des Normalstrahlenganges zusammenfällt und in deren anderem Brennpunkt der axiale Objektpunkt (8) liegt, drehbar, die gegenstandsseitige reflektierende Fläche (7) tangential an einen Abschnitt dieser Ellipse geführt und das eine Hauptobjektiv (3) in einer kreisbogenförmigen Führung (63) mit dem axialen Objektpunkt (8) als Mittelpunkt schwenkbar und entsprechend dem eingestellten Strahlengang positionierbar ist.

18. Strahlenumlenkvorrichtung nach den Ansprüchen 3 und 9, dadurch gekennzeichnet, dass die Verstellvorrichtung für die reflektierenden Flächen (6, 7) und die optischen Mittel eine mit Motoren (59, 61, 62, 65; 79) und Messwertgebern verbundene elektronische Steuereinrichtung (85) aufweist, wobei die Motoren und die Messwertgeber ihrerseits über ein Gestänge (60, 64; 73, 77) mit den Trägern der reflektierenden Flächen (6, 7) und dem Objektivträger zusammenwirken, wobei die beobachterseitige reflektierende Fläche (6) um eine mit einem im Gehäuse (2) angeordneten Schieber (82) festverbundene Achse (31) drehbar ist, welche durch einen Brennpunkt einer Ellipse, deren eine Achse mit der optischen Achse (4) des Normalstrahlenganges zusammenfällt und in deren anderem Brennpunkt der axiale Objektpunkt (8) liegt, geht und die gegenstandsseitige reflektierende Fläche (7) tangential an einen Abschnitt dieser Ellipse geführt ist und das Hauptobjektiv in der dem jeweils eingestellten Strahlengang entsprechenden Lage mittels einer Kreisbogenführung (63) mit dem axialen Objektpunkt (8) als Mittelpunkt gehalten ist.

19. Strahlenumlenkvorrichtung nach den Ansprüchen 1(c) und 9, dadurch gekennzeichnet, dass der Schieber (5) im Gehäuse (2) quer zur optischen Achse des Normalstrahlenganges (4) verstellbar angeordnet ist und die beobachterseitige reflektierende Fläche (6) und das dem Normalstrahlengang zugeordnete Hauptobjektiv (3) trägt, und dass das dem umgelenkten Strahlengang zugeordnete zweite Hauptobjektiv (3') sowie die gegenstandsseitige reflektierende Fläche (7) fest im Gehäuse (2) montiert ist.

20. Strahlenumlenkvorrichtung nach den Ansprüchen 1(c) und 9, dadurch gekennzeichnet, dass der Schieber (21) im Gehäuse (2) entlang einer Kreisbahn mit dem axialen Objektpunkt (8) als Mittelpunkt verschwenkbar ist und das Hauptobjektiv (3) sowie die beobachterseitige reflektierende Fläche (6) trägt, wobei in den Endlagen der Verschwenkung das Hauptobjektiv (3) im umgelenkten Strahlengang bzw. im Normalstrahlengang liegt, und dass die gegenstandsseitige reflektierende Fläche (7) fest im Gehäuse (2) montiert ist.

21. Strahlenumlenkvorrichtung nach Anspruch 1, dadurch gekennzeichnet, dass die Strahlenumlenkvorrichtung um die optische Achse des Normalstrahlenganges (4) manuell oder motorisch drehbar ist.

**Claims**

1. Beam deflector for an optical instrument, particularly a microscope of a random type, in order to observe an object from directions diverging from a normal optical path substantially given by the optical axis of the instrument, said deflector having two reflecting faces (6, 7), which can be brought into the normal optical path, characterized in that the two reflecting faces (6, 7) are so arranged as regards position and spacing with respect to one another in a casing (2), that in the position for the deflected optical path, its optical axis (4′) and the optical axis of the normal optical path (4) intersect at a point (8), said intersection point being the axial object point of the optical system of one of the two optical paths, that optical means (16, 17) are provided in casing (2) making said intersection point (8) also the axial object point of the optical system of the other optical path, in that either:

a) the optical means are constituted by a negative member (17) or a plane-parallel plate (16), which is arranged in the vicinity of the deflected optical path or
b) the optical means are constituted by a positive member (18) arranged in the object-side area of the normal optical path, or
c) the optical means are two main lenses (3, 31), whereof one is associated with the normal optical path and one is associated with the object side area of the deflected optical path.

2. Beam deflector according to claim 1, characterized in that an adjusting device is provided for adjusting the position and spacing of the reflecting faces (6, 7) as a function of the lateral viewing angle (α) during viewing with the deflected optical path in casing (2).

3. Beam deflector according to claim 2, characterized in that the adjusting device is additionally constructed for adjusting the optical means as a function of the lateral viewing angle (α) during viewing with the deflected optical path in casing (2).

4. Beam deflector according to claim 1, characterized in that the optical means are reflecting faces (6, 7) constructed as curved surfaces.

5. Beam deflector according to claim 1, characterized in that each reflecting face is the face of a mirror.

6. Beam deflector according to claim 1, characterized in that each reflecting face is the face of a prism.

7. Beam deflector according to claim 1, characterized in that a feed device with a drive (81,86) is provided, for changing from a position corresponding to the normal optical path to a position corresponding to the deflected optical path.

8. Beam deflector according to claim 7, wherein the feed device for changing from the normal optical path to the deflected optical path is the casing (2) insertable into the optical axis of the normal optical path at right angles thereto.

9. Beam deflector according to claim 7, characterized in that the feed device for changing from the normal optical path to the deflected optical path is a slide (5, 21, 82) arranged in casing (2).

10. Beam deflector according to claim 7, characterized in that the feed device drive comprises a kinematic gear (69, 70, 83), which can be connected to gears of other deflector means and is controllable as a function thereof.

11. Beam deflector according to claim 7, characterized in that the feed device drive has an electronic control device (81, 86), motors and primary measuring elements, which is connected to corresponding mechanisms for controlling other deflector means and is controlled as a function thereof.

12. Beam deflector according to claims 1(a) and 2, characterized in that the adjusting device for the reflecting faces (6, 7) has a kinematic gear with elliptical guide, tangential guide and angular division gear for setting the reciprocal position of the reflecting faces (6, 7), the viewer-side reflecting face (6) being rotatable about a casing-fixed axis (31) through a focal point of an ellipse, whereof one axis coincides with the optical axis (4) of the normal optical path and in whose other focal point is located the axial object point (8) and the second reflecting face (67) is guided tangentially on a portion of this ellipse.

13. Beam deflector according to claims 1(c) and 3, characterized in that the adjusting device for the reflecting faces (6, 7) and the optical means in casing (2) has a lens slide (22) being the main lens (3), and displaceable along a circular path with the axial object point (8) and the centre point, the object side reflecting face (7) being mounted so as to pivot about a slide-fixed axis (24) at right angles to the optical axis of the main lens (3) adjacent to the latter and on said reflecting face (7) engages a guide rod (25) cooperating with a second control guide (26) arranged on casing (2) and on lens slide (22) is provided a first control guide (29), in which engages a guide rod (28) of the viewer-side reflecting face (6), which is rotatable about a casing-fixed rotation axis (27) at right angles to the optical axis of the normal optical path and intersecting the latter.

14. Beam deflector according to claims 1(c) and 3, characterized in that the adjusting device for the reflecting faces (6, 7) and the optical means has a kinematic gear having an elliptical guide, tangential guide and angular division gear for the reciprocal setting of the reflecting faces and a guide rod (70) connected to the carrier of the object-side reflecting face (7) for the pivotal drive of the one main lens (3), the viewer-side reflecting face (6) being rotatable about a casing-fixed axis (31) through a focal point of an ellipse, whereof one axis coincides with the optical axis (4) of the normal optical path and in whose other focal point is located the axial object point (8), the object-side reflecting face (7) is guided tangentially on a portion of this ellipse and one main lens (3) is pivotable about the axial object point (8).

15. Beam deflector according to claims 3 and 9, characterized in that the adjusting device for the reflecting faces (6, 7) and the optical means have a kinematic gear with an elliptical guide, tangential guide and angular division gear for setting the reciprocal position of the reflecting faces (6, 7), the observer-side reflecting face (6) being rotatable about an axis (31) fixed to the slide (82) on casing (2), said axis (31) passing through one focal point of an ellipse, whose one axis coincides with the optical axis (4) of the normal optical path and in whose other focal point is located the axial point (8) and the object-side reflecting face (7) is guided tangentially on a portion of said ellipse as well as a lens guide gear connected in a disengageable manner with one of the three other gears and which maintains the main lens (3) in a position corresponding to the in each case set optical path on an arc with the axial object point (8) as the centre point.

16. Beam deflector according to claims 1(a) and 2, characterized in that the adjusting device for the reflecting faces has an electronic control means (58, 60) and a linkage (51, 53, 73, 77) connected to the carriers of the reflecting faces (6, 7), to motors (52, 54, 56, 57,72, 74, 79) and to primary measuring elements, the viewer-side reflecting face (6) being rotatable about a casing-fixed axis (31) through one focal point of an ellipse, whereof one axis coincides with the optical axis (4) of the normal optical path and in whose other focal point is located the axial object point (8) and the object-side reflecting face (7) is guided tangentially on a portion of said ellipse.

17. Beam deflector according to claims 1(c) and 3, characterized in that the adjusting device for the reflecting faces (6,7) and the optical means have an electronic control device (67) connected to motors (59, 61, 62, 65) and primary measuring elements, the motors and the primary measuring elements in turn cooperating via a linkage (60, 64) with the carriers of the reflecting faces (6, 7) and the lens carrier, the view-side reflecting face being rotatable about a casing-fixed axis (31) through a focal point of an ellipse, whereof one axis coincides with the optical axis (4) of the normal optical path and in whose other focal point is located the axial object point (8), the object-side reflecting face (7) being guided tangentially on a portion of said ellipse and one main lens (3) is pivotable in an arcuate guide (63) with the axial object point (8) as the centre point and is positionable corresponding to the set optical path.

18. Beam deflector according to claims 3 and 9, characterized in that the adjusting device for the reflecting faces (6, 7) and the optical means have an electronic control device (85) connected to motors (59, 61, 62, 65, 79) and primary measuring elements, the motors and primary measuring elements cooperating in turn via a linkage (60, 64, 73, 77) with the carriers of the reflecting faces (6, 7) and the lens carrier, the viewer-side reflecting face (6) being rotatable about an axis (31) fixed to a slide (82) arranged in casing (2) said axis (31) passing through a focal point of an ellipse whereof one axis coincides with the optical axis (4) of the normal optical path and in whose other focal point is located the axial object point (8) and the object-side reflecting face (7) is guided tangentially on a portion of said ellipse and the main lens is held in the position corresponding to the in each case set optical path by means of an arcuate guide (63) with the axial object point (8) as the centre point.

19. Beam deflector according to claims 1(c) and 9, characterized in that the slide (5) is arranged in casing (2) in an adjustable manner at right angles to the optical axis of the normal optical path (4) and carries the viewer-side reflecting face (6) and the main lens (3) associated with the normal optical path and that the second main lens (3') associated with the deflected optical path, as well as the object-side reflecting face (7) is fitted in a fixed manner in casing (2).

20. Beam deflector according to claims 1(c) and 9, characterized in that the slide (21) is pivotable in casing (2) along a circular path with the axial object point (8) as the centre point and carries the main lens (3), as well as the viewer-side reflecting face (6), whereby in the end positions of pivoting the main lens (3) is located in the deflected optical path or in the normal optical path, and that the object-side reflecting face (7) is fitted in fixed manner in casing (2).

21. Beam deflector according to claim 1, characterized in that the beam deflector can be rotated in manual or motor manner about the optical axis of the normal optical path (4).

**Revendications**

1. Dispositif pour faire tourner des faisceaux lumineux destiné à un instrument d'optique, notamment à un microscope d'un type quelconque, et permettant d'observer un objet en s'écartant du trajet normal du faisceau lumineux déterminé essentiellement par l'axe optique de l'instrument, ce dispositif comportant deux surfaces réfléchissantes (6, 7) qui peuvent être placées sur le trajet normal du faisceau lumineux, caractérisé en ce que les deux surfaces réfléchissantes (6, 7) sont disposées dans une enveloppe (2) dans des positions relatives et à une distance l'une de l'autre telles que, dans la position correspondant au trajet du faisceau lumineux après qu'il ait tourné, l'axe optique (4') de ce trajet et l'axe optique du trajet normal (4) du faisceau lumineux se coupent en un point (8), ce point d'intersection étant le point objet axial du système optique de l'un des deux trajets du faisceau lumineux, en ce que l'enveloppe (2) comprend des moyens optiques (16, 17) qui font que ce point d'intersection (8) devient également le point objet axial du système optique de l'autre trajet de rayons lumineux, du fait:

a) que ces moyens optiques sont constitués par un verre négatif (17) ou une lame à faces parallèles (16) placés dans la zone du trajet du faisceau lumineux qui a tourné.

b) ou que ces moyens optiques sont constitués par un verre positif (18) placé du côté de l'objet dans la zone du trajet normal du faisceau lumineux.

c) ou que ces moyens optiques sont constitués par deux objectifs principaux (3, 31) associés respectivement au trajet normal du faisceau lumineux et au côté objet du faisceau lumineux qui a tourné.

2. Dispositif pour faire tourner des faisceaux lumineux selon la revendication 1, caractérisé en ce qu'il comprend un dispositif de manœuvre permettant de faire varier la position et la distance des surfaces réfléchissantes (6, 7) en fonction de l'angle d'observation latérale (α) pendant l'observation dans le cas où le trajet du faisceau lumineux a tourné dans l'enveloppe (2).

3. Dispositif pour faire tourner des faisceaux lumineux selon la revendication 2, caractérisé en ce que le dispositif de manœuvre est constitué de manière à permettre également le déplacement des moyens optiques en fonction de l'angle d'observation latérale (α) pendant l'observation dans le cas où le trajet du faisceau lumineux a tourné dans l'enveloppe (2).

4. Dispositif pour faire tourner des faisceaux lumineux selon la revendication 1, caractérisé en ce que les moyens optiques sont constitués par des surfaces réfléchissantes (6, 7) ayant la forme de surfaces courbes.

5. Dispositif pour faire tourner des faisceaux lumineux selon la revendication 1, caractérisé en ce que chacune des surfaces réfléchissantes est la surface d'un miroir.

6. Dispositif pour faire tourner des faisceaux lumineux selon la revendication 1, caractérisé en ce que chacune des surfaces réfléchissantes est la surface d'un prisme.

7. Dispositif pour faire tourner des faisceaux lumineux selon la revendication 1, caractérisé en ce qu'il comprend un dispositif de déplacement, muni d'un dispositif de commande (81, 86), qui assure le passage d'une position correspondant au trajet normal du faisceau lumineux à une position correspondant au trajet du faisceau lumineux après qu'il a tourné.

8. Dispositif pour faire tourner des faisceaux lumineux selon la revendication 7, caractérisé en ce que le dispositif de déplacement qui assure le passage du trajet normal du faisceau lumineux au trajet du faisceau lumineux après qu'il ait tourné est constitué par l'enveloppe (2) qui peut être déplacée transversalement par rapport à l'axe optique du trajet normal du faisceau lumineux pour être placée sur ce trajet.

9. Dispositif pour faire tourner des faisceaux lumineux selon la revendication 7, caractérisé en ce que le dispositif de déplacement qui assure le passage du trajet normal du faisceau lumineux au trajet du faisceau lumineux après qu'il ait tourné est constitué par un registre coulissant (5, 21, 82) monté dans l'enveloppe (2).

10. Dispositif pour faire tourner des faisceaux lumineux selon la revendication 7, caractérisé en ce que le dispositif de commande du dispositif de déplacement est constitué par un mécanisme cinématique (69, 70, 83) qui peut être relié aux mécanismes d'autres parties du dispositif et peut être commandé en fonction de ceux-ci.

11. Dispositif pour faire tourner des faisceaux lumineux selon la revendication 7, caractérisé en ce que le dispositif de commande du dispositif de déplacement comporte un dispositif de commande électronique (81, 86) et des moteurs et des appareils d'enregistrement de valeurs mesurées qui sont reliés à des dispositifs analogues pour la commande d'autres dispositifs et sont commandés en fonction de ces dispositifs analogues.

12. Dispositif pour faire tourner des faisceaux lumineux selon les revendications 1(a) et 2, caractérisé en ce que le dispositif de déplacement des surfaces réfléchissantes (6, 7) comporte un mécanisme cinématique comprenant un mécanisme de guidage elliptique, un mécanisme de guidage tangentiel et un mécanisme de subdivision angulaire pour le réglage des positions relatives des surfaces réfléchissantes (6, 7), la surface réfléchissante (6) située du côté de l'observateur pouvant tourner autour d'un axe (31) fixé à l'enveloppe et passant par le foyer d'une ellipse dont l'un des axes coïncide avec l'axe optique (4) du trajet normal du faisceau lumineux et dont l'autre foyer est occupé par le point objet axial (8) et la deuxième surface réfléchissante (7) étant guidée tangentiellement au contact d'un secteur de cette ellipse.

13. Dispositif pour faire tourner des faisceaux lumineux selon les revendications 1(c) et 3, caractérisé en ce que le dispositif de déplacement des surfaces réfléchissantes (6, 7) et des moyens optiques placés dans l'enveloppe (2) comprend un chariot d'objectif (22) qui peut se déplacer le long d'une circonférence ayant pour centre le point objet (8) et qui porte l'objectif principal (3) tandis qu'à proximité de cet objectif principal (3) la surface réfléchissante (7) située du côté de l'objet est montée sur palier de manière à pouvoir tourner, autour d'un axe (24) fixé solidement sur le chariot, transversalement par rapport à l'axe optique de l'objectif principal (3) et que cette surface réfléchissante (7) est soumise à l'action d'une tige (25) qui coopère avec un deuxième dispositif de commande (26) monté sur l'enveloppe (2) et que le chariot d'objectif (22) comporte un premier dispositif de guidage de commande (29) avec lequel est en prise une tige (28) de la surface réfléchissante (66) située du côté de l'observateur, qui peut tourner autour d'un axe de rotation (27) fixé à l'enveloppe, orienté transversalement par rapport à l'axe optique du trajet normal du faisceau lumineux et coupant ce trajet.

14. Dispositif pour faire tourner des faisceaux lumineux selon les revendications 1(c) et 3, caractérisé en ce que le dispositif de déplacement des surfaces réfléchissantes (6, 7) et des moyens optiques comprend un mécanisme cinématique comprenant un mécanisme de guidage elliptique, un mécanisme de guidage tangentiel et un mécanisme de subdivision angulaire pour le réglage des positions relatives des surfaces réfléchissantes et une tige (70) reliée au support de la surface réfléchissante située du côté de l'objet pour l'entraînement par changement de direction de l'un des objectifs principaux (3), la surface réfléchissante (6) située du côté de l'observateur pouvant tourner autour d'un axe (31) fixé par rapport à l'enveloppe et passant par l'un des foyers d'une ellipse dont l'un des axes coïncide avec l'axe optique (4) du trajet normal du faisceau lumineux et dont l'autre foyer est occupé par le point objet axial (8), la surface réfléchissante (7) située du côté de l'objet étant guidée tangentiellement le long d'un secteur de cette ellipse et l'un des objectifs principaux (3) pouvant pivoter autour du point objet axial (8).

15. Dispositif pour faire tourner des faisceaux lumineux selon les revendications 3 et 9, caractérisé en ce que le dispositif de déplacement des surfaces réfléchissantes (6, 7) et des moyens optiques comprend un mécanisme cinématique portant un mécanisme de guidage elliptique, un mécanisme de guidage tangentiel et un mécanisme de subdivision angulaire pour le réglage des positions relatives des surfaces réfléchissantes (6, 7), la surface réfléchissante (6) située du côté de l'observateur pouvant tourner autour d'un axe (31) qui est solidaire d'un registre coulissant (82) monté dans l'enveloppe (2) et passe par l'un des foyers d'une ellipse dont l'un des axes coïncide avec l'axe optique (4) du trajet normal du faisceau lumineux, et dont l'autre foyer est occupé par le point objet (8) et la surface réfléchissante (7) située du côté de l'objet étant guidée tangentiellement le long d'un secteur de cette ellipse, le dispositif comprenant un mécanisme de guidage de l'objectif qui est relié, de manière amovible, à l'un des trois autres mécanismes et qui maintient l'objectif principal (3) dans une position correspondant au trajet de faisceau lumineux effectif, sur un arc de cercle dont le centre est le point objet (8).

16. Dispositif pour faire tourner des faisceaux lumineux selon les revendications 1(a) et 2, caractérisé en ce que le dispositif de déplacement des surfaces réfléchissantes comprend un dispositif de commande électronique (58, 80) et un système de tiges (51, 53, 73, 77) relié aux supports des surfaces réfléchissantes (6, 7), à des moteurs (52, 54, 56, 57, 72, 74, 79) et à des organes de mesure, la surface réfléchissante (6) située du côté de l'observateur pouvant tourner autour d'un axe (31) solidaire de l'enveloppe et passant par l'un des foyers d'une ellipse dont l'un des axes coïncide avec l'axe optique (4) du trajet normal du faisceau lumineux et dont l'autre foyer est occupé par le point objet axial (8) et la surface réfléchissante (7) située du côté de l'objet étant guidée tangentiellement le long d'un secteur de cette ellipse.

17. Dispositif pour faire tourner des faisceaux lumineux selon les revendications 1(c) et 3, caractérisé en ce que le dispositif de déplacement des surfaces réfléchissantes (6, 7) et des moyens optiques comprend un dispositif de commande électronique (67) reliée à des moteurs (59, 61, 62, 65) et à des organes de mesure, ces moteurs et ces organes de mesure coopérant, par l'intermédiaire d'un système de tiges (60, 64) avec les supports des surfaces réfléchissantes (6, 7) et avec le support d'objectif, la surface réfléchissante (6) située du côté de l'observateur pouvant tourner autour d'un axe (31) solidaire de l'enveloppe et passant par l'un des foyers d'une ellipse dont l'un des axes coïncide avec l'axe optique (4) du trajet normal du faisceau lumineux et dont l'autre foyer est occupé par le point objet axial (8), la surface réfléchissante (7) située du côté de l'objet étant guidée tangentiellement à un secteur de cette ellipse et l'un des objectifs principaux (3) pouvant pivoter dans un guide (63) en forme d'arc de cercle ayant comme centre le point objet axial (8) et pouvant être positionné d'après le trajet du faisceau lumineux effectif.

18. Dispositif pour faire tourner des faisceaux lumineux selon les revendications 3 et 9, caractérisé en ce que le dispositif de déplacement des surfaces réfléchissantes (6, 7) et des moyens optiques comprend un dispositif de commande électronique (85) reliée à des moteurs (59, 61, 62, 65, 79) et à des organes de mesure, ces moteurs et ces organes de mesure coopérant, par l'intermédiaire d'un système de tiges (60, 64, 73, 77) avec les supports des surfaces réfléchissantes (6, 7) et avec le support d'objectif, la surface réfléchissante (6) située du côté de l'observateur pouvant tourner autour d'un axe (31) solidaire d'un registre coulissant (82) monté dans l'enveloppe (2) et passant par l'un des foyers d'une ellipse dont l'un des axes coïncide avec l'axe optique (4) du trajet normal du faisceau lumineux et dont l'autre foyer est occupé par le point objet axial (8), la surface réfléchissante (7) située du côté de l'objet étant guidée tangentiellement le long d'un secteur de cette ellipse et l'objectif principal étant maintenu dans la position correspondant au trajet du faisceau lumineux effectif au moyen d'un dispositif de guidage (63) en arc de cercle dont le centre est le point objet axial (8).

19. Dispositif pour faire tourner des faisceaux lumineux selon les revendications 1(c) et 9, caractérisé en ce que le registre coulissant (5) placé dans l'enveloppe est monté de manière à pouvoir se déplacer transversalement par rapport à l'axe optique du trajet normal (4) du faisceau lumineux et porte la surface réfléchissante (6) située du côté de l'observateur et l'objectif principal (3) correspondant au trajet normal du faisceau lumineux et en ce que le deuxième objectif principal (3') qui correspond au trajet du faisceau lumineux qui a tourné et la surface réfléchissante (7) située du côté de l'objet sont solidaires de l'enveloppe (2).

20. Dispositif pour faire tourner des faisceaux lumineux selon les revendications 1(c) et 9, caractérisé en ce que le registre coulissant (21) peut tourner dans l'enveloppe (2) le long d'un guide circulaire ayant pour centre le point objet axial (8) et porte l'objectif principal (3) et la surface réfléchissante (6) située du côté de l'observateur, l'objectif principal (3) se trouvant, dans ses positions de pivotement terminales, sur le trajet du faisceau lumineux qui a tourné ou sur le trajet normal du faisceau lumineux, et en ce que la surface réfléchissante (7) située du côté de l'objet est montée de manière à être fixé dans l'enveloppe (2).

21. Dispositif pour faire tourner des faisceaux lumineux selon la revendication 1, caractérisé en ce que la rotation de ce dispositif autour de l'axe optique du trajet normal du faisceau lumineux (4) peut s'effectuer à la main ou au moyen d'un moteur.

Fig.1

Fig.2

0 055 209

Fig. 3

Fig.4

0 055 209

Fig.5b

Fig.5a

Fig. 5c

Fig.6a

Fig.6b

0 055 209

Fig.7b

Fig.7a

Fig.8a

Fig.8b

Fig.9

Fig.10

Fig.11a

Fig.11b

Fig.12

Fig.13

Fig.14

Fig.15

Fig.16